Europäisches Patentamt

European Patent Office

Office européen des brevets

(19)

(11) Veröffentlichungsnummer: **0 455 148 A2**

## (12) EUROPÄISCHE PATENTANMELDUNG

(21) Anmeldenummer: 91106745.2

(51) Int. Cl.⁵: **H02P 7/628**

(22) Anmeldetag: 26.04.91

(30) Priorität: 30.04.90 DE 4013967

(43) Veröffentlichungstag der Anmeldung:
**06.11.91 Patentblatt 91/45**

(84) Benannte Vertragsstaaten:
**DE ES FR GB IT**

(71) Anmelder: **RETRONIC- PROZESS-
SYSTEMTECHNIC GmbH
Alfred-Keller-Strasse, 32-34
W-5200 Siegburg(DE)**

(72) Erfinder: **Fekete, Gabor, Dr.
Geistinger Strasse 34
W-5202 Hennef 1(DE)**

(74) Vertreter: **Harwardt, Günther, Dipl.-Ing. et al
HARWARDT NEUMANN PATENTANWÄLTE
Scheerengasse 2 Postfach 1455
W-5200 Siegburg 2(DE)**

(54) **Netzkommutierter Vektor-I-Umrichter.**

(57) Die Erfindung betrifft ein Verfahren und eine Schaltungsanordung zur Steuerung eines Asynchronmotors 4. Der Erfindung liegt hierbei die Aufgabe zugrunde, eine schnellere Regelungstechnik mit einem erweiterten Einsatzbereich des Asynchronmotors 4 zu schaffen. Erfindungsgemäß ist zur Lösung des Verfahrens vorgesehen, daß eine Kommutierung des Motorstromes ganz oder zumindest teilweise außerhalb des I-Umrichters vorgenommen wird, wobei der Kommutierungsstrom über die Schaltelemente des I-Umrichters und des Brückengleichrichters einer Kommutierungseinheit zugeführt wird und daß der Schaltlogik 5, 6, 7, 8, 9, 24 zur Steuerung der Netzspeiseeinrichtung 1 und des Leistungsteils 2 als Meßwerte der Motorstrom I, die Motorinduktionsspannung $U_i$ und ein Drehzahlsollwert $f_s$ vorgegeben wird.

Figur 1

Die Erfindung betrifft ein verfahren zur Steuerung eines Asynchronmotors, insbesondere mit einem kurzgeschlossenen Käfigläufer, mit einem dem Drehstromnetz zugeordneten Brückengleichrichter und einem über eine Meßvorrichtung dem Asynchronmotor zugeordneten I-Umrichter, welche über einen Gleichstromzwischenkreis miteinander verbunden sind und welcher eine in Reihe zum Brückengleichrichter und I-Umrichter geschaltete Drossel aufweist sowie einem weiteren Brückengleichrichter, der parallel zur Meßvorrichtung mit dem Ausgang des I-Umrichters verbunden ist und dessen Gleichstromausgang mit dem Eingang eines Wechselrichters verbunden ist, wobei der Wechselrichter über einen Rückspeisetransformator ausgangsseitig mit dem Drehstromnetz verschaltet ist und wobei der Brückengleichrichter, der Wechselrichter und der I-Umrichter von einer Schaltlogik gesteuert werden.

Die stufenlose Regelung eines Asynchronmotors erfolgt nach dem Stand der Technik über I-Umrichter mit Kommutierungs- bzw. Löschungskondensatoren und Sperrdioden, wobei die Kapazität der Kommutierungskondensatoren jeweils an einen bestimmten Asynchronmotor angepaßt werden muß und die Sperrspannungen und Nennleistungen der Thyristoren und Dioden und der Löschungskondensatoren aufgrund der großen Spannungsspitzen entsprechend gewählt werden müssen, weil die Spannungsspitzen während der Kommutierungsphase sehr hohe Werte erreichen, so daß eine entsprechende Dimensionierung der Halbleiter und Kondensatoren gewählt werden muß.

Hierdurch wird eine derartige Schaltungsanordnung erheblich verteuert und benötigt darüber hinaus einen größeren Platzbedarf. Desweiteren ist mit den herkömmlichen Schaltungsanordnungen ein Asynchronmotor mit einem anliegenden Lastmoment nur begrenzt bis auf eine Drehzahl null herunterfahrbar.

Der Erfindung liegt daher die Aufgabe zugrunde, ein Verfahren zur Steuerung eines Asynchronmotors anzugeben und eine Schaltungsanordnung zu schaffen, die eine schnellere Regelungstechnik mit einem erweiterten Einsatzbereich des Asynchronmotors ermöglicht.

Erfindungsgemäß ist zur Lösung des Verfahrens vorgesehen, daß eine Kommutierung des Motorstromes ganz oder zumindest teilweise außerhalb des I-Umrichters vorgenommen wird, wobei der Kommutierungsstrom über die Schaltelemente des I-Umrichters und des Brückengleichrichters einer Kommutierungseinheit zugeführt wird und daß der Schaltlogik zur Steuerung der Netzspeiseeinrichtung und des Leistungsteils als Meßwerte der Motorstrom, die Motorinduktionsspannung und ein Drehzahlsollwert vorgegeben wird.

Der wesentliche Vorteil der Erfindung liegt darin, daß eine Anpassung der Löschungskondensatoren an den Asynchronmotor entfällt, so daß die gleiche Schaltungsanordnung für jeden beliebigen Asynchronmotor unterschiedlicher Impedanz verwendet werden kann, wobei lediglich die Umrichternennleistung beachtet werden muß. Die Motorstromspitzen können hierbei kurzfristig die Nennströme um einen 2,5-fachen Wert überschreiten, ohne daß die Halbleiterbauelemente zerstört werden. Ferner besteht die Möglichkeit, daß ein Teil der Energie durch einen Wechselrichter in das Netz zurückgespeist wird. Zur Steuerung des Asynchronmotors ist es hierbei lediglich notwendig, daß der Motorstrom und die Motorspannung gemessen und ein Drehzahlsollwert vorgegeben wird, wobei aus dem voreingestellten externen Drehzahlsollwert ein interner Drehzahlsollwert berechnet und der Regelungslogik zugeführt wird.

Durch die Wahl eines I-Umrichters mit Thyristoren ist es notwendig, daß die Thyristoren über Löschungskondensatoren gelöscht werden, sofern nicht andere Maßnahmen getroffen werden, wobei eine Selbstentladung der Kondensatoren durch Dioden verhindert wird. Bei dem vorgeschlagenen Verfahren zur Steuerung eines Asynchronmotors wird die Kommutierung des Motorstromes ganz oder zumindest teilweise in einer Kommutierungseinheit vorgenommen, wobei die Kondensatoren im I-Umrichter im wesentlichen nur zur Löschung der Thyristoren benötigt werden und wobei der Anteil der Kommutierung in der Kommutierungseinheit durch das Kapazitätsverhältnis der Löschungskondensatoren des I-Umrichters und der Kommutierungseinheit bestimmt wird, sofern im I-Umrichter Thyristoren mit Löschungskondensatoren eingesetzt werden und daß im I-Umrichter mit GTO's oder Transistoren eine Kommutierung vollständig in der Kommutierungseinheit vorgenommen wird. Ferner kann im Falle des vorgeschlagenen I-Umrichters die Drossel im Gleichstromzwischenkreis auf einen wesentlich verringerten Wert reduziert werden, da diese nur zur Dämpfung zur Oberwellen benötigt wird. Desweiteren kann die Kapazität der Löschungskondensatoren ebenfalls erheblich verringert werden.

Ferner wird vorgeschlagen, daß zusätzlich die Steuerung eines zur Drossel parallel geschalteten Schalters und eines in Reihe geschalteten Zerhackers von der Schaltlogik vorgenommen wird. Durch den Einsatz einer Drossel mit einem parallel geschalteten Schalter und eines Zerhackers im Gleichstromzwischenkreis kann auf jegliche Löschungskondensatoren im I-Umrichter bei der Verwendung von Thyristoren verzichtet werden.

In Ausgestaltung der Erfindung ist vorgesehen, daß durch die Regelungslogik ein selbsttätiges Auffinden der aktuellen Wellendrehzahl ermöglich wird.

In besonderer Ausgestaltung der Erfindung ist vorgesehen, daß der Schaltlogik zusätzlich die Wellenposition und/oder die Statorfrequenz des Asynchronmotors zugeleitet wird. Durch die Wahl eines Steuerungsverfahrens mit Erfassung der Wellenposition und/oder der Statorfrequenz des Asynchronmotors ist es möglich, eine Positionsregelung der Motorwelle vorzunehmen, wenn es im Einzelfall erwünscht ist.

Nach weiteren Verfahrensmerkmalen der Erfindung ist vorgesehen, daß aus der Motorinduktionsspannung in der mathematischen Recheneinheit die Flußamplitude, ein digitalisiertes Flußamplitudensignal und die Flußfrequenz unter Berücksichtigung eines vorgegebenen minimal zulässigen Flußamplitudenwertes sowie ein digitales Stromgrenzsignal ermittelt wird und daß aus dem Motorstrom und der berechneten Flußamplitude in der mathematischen Recheneinheit das Drehmoment und die Wirkleistung und aus dem Drehmoment die Rotorfrequenz berechnet wird und daß aus dem Drehmoment und der Wirkleistung der Wirkstrom berechnet wird, wobei die Motorinduktionsspannung des Asynchronmotors bei Laständerungen in einer Übergangsphase durch die Steuerlogik über einen konstanten Wert tan $\alpha$ zwangsnachgeführt wird.

Bei der abgeleiteten Regelungsgröße $\alpha$ handelt es sich hierbei um den Momentenwinkel, wobei die Regelung so ausgelegt ist, daß die Steuerlogik auf Änderungen des Motorstromwertes sofort reagiert und den Momentenwinkel, der sich ggf. unter dem derzeitigen Lastmoment einstellen könnte, vorzeitig berechnet und im Falle eines Überschreiten des vorgegebenen Grenzwertes regelungstechnisch berücksichtigt und damit einer Veränderung des Quotienten tan sofort steuernd entgegengewirkt wird.

In weiterer Ausgestaltung des Verfahrens ist vorgesehen, daß die Schaltlogik im Bereich von 0 bis 2 Hz durch eine externe Vorgabe der Betriebsart eingestellt und die mathematische Einheit über ein Blindstromschaltsignal der Regelungslogik angesteuert wird und daß eine Berechnung des Stromsollwertes in der mathematischen Einheit aus dem Blindstrom und dem Wirkstrom nach

$$I_s = \sqrt{B + I_w^2} + k\, I_w$$

vorgenommen wird, wobei k ein konstanter einstellbarer Parameter ist und wobei in der ersten Betriebsart A der Anteil B einem dem quadratischen Blindstrom entsprechenden Wert gleichgesetzt und in der Betriebsart B kleiner als der quadratische Blindstrom sowie in der Betriebsart C dem quadratischen Wirkstrom gleichgesetzt wird

Durch die Berücksichtigung des quadratischen Wirkstromes mit einem multiplikativen Parameter bei der Berechnung des Stromsollwertes wird eine wesentlich höhere Laufruhe des Asynchronmotors im niedigeren Drehzahlbereich erzielt. Die Steuerung wird hierbei im wesentlichen von der Regelungslogik und der mathematischen Recheneinheit vorgenommen, die aus der Drehzahlsollwertvorgabe und der berechneten Motorinduktionsspannung und dem Motorstrom des Asynchronmotors die Steuersignale berechnet bzw. festlegt. Die Frequenz des I-Umrichters wird hierbei zunächst von der Drehzahlsollwertvorgabe festgelegt und bei einer Laständerung von der Steuerlogik unter Berücksichtigung des Betriebsmodus geändert, so daß die Statorfrequenz wieder an die Wellendrehzahl herangeführt werden kann. Wenn keine Belastung des Asynchronmotors vorliegt, wird durch den ermittelten Frequenzfehler zwischen tatsächlicher und vorgegebener Statorfrequenz der Asynchronmotor auf die neuen Belastungsverhältnisse eingeregelt. Im Betriebsmodus A mit einem Stillstand der Welle und einer Drehzahlvorgabe $f_1^* = 0$ wird der Momentenwinkel zwangsweise auf $+-90$ Grad gesetzt, um ein Stillstand des Asynchronmotors zu erreichen, während im Betriebsmodus B mit einer Drehzahlvorgabe $f_1^* \neq 0$ und einem kleinen Lastmoment die Wellendrehzahl ungleich null und bei einem großen Lastmoment gleich null gesetzt wird. Im Betriebmodus C erfolgt eine Drehfeldsperrung des Stromfeldes, so daß ebenfalls ein Stillstand des Motors erreicht wird.

Ferner ist vorgesehen, daß aus dem Drehmoment über einen Integrator ein digitalisiertes Umschaltsignal für einen Wellenfrequenzdetektor und einen umschaltbaren Analoginverter sowie aus der Wirkleistung und einem vorgegebenen optimalen Wirkleistungswert ein Flußfehler für den Analoginverter erzeugt wird, daß aus der Wirkleistung über einen steuerbaren Komparator ein Schaltsignal für das Flip-Flop erzeugt wird, wobei aus der Flußfrequenz, der minimalen Flußamplitude, einem vorgegebenen Momentenwinkelgrenzwert und dem vorgewählten Betriebsmodus das von der Steuerlogik eingestellte Vergleichssignal für den Komparator erzeugt wird.

In weiterer Ausgestaltung der Erfindung ist vorgesehen, daß aus einem internen Drehzahlsollwert und einer aus einem PI-Regler ermittelten Differenzfrequenz ein Eingangssignal für den umschaltbaren PI/I-Regler und einen Addierer ermittelt wird, wobei die Umschaltung des PI/I-Reglers durch die Flußfrequenz vorgenommen wird und daß die jeweils aktuelle Drehrichtung des Statorfeldes über das Vorzeichen des Ausgangssignals des PI/I-Reglers ermittelt wird und daß aus der Rotorfrequenz und der Differenzfrequenz des Addierers ein Steuersignal für einen Frequenzabsolutwert- und Magnetisierungsstromregler unter Berücksichtigung einer Korrekturfrequenz des Frequenzabsolutwert- und Magnetisierungsstromreglers und des eingestellten Betriebsmodus erzeugt wird, wobei durch den Frequenzabsolutwert- und Magnetisierungsstromregler der Blindstrom errechnet und das Blindstromschaltsignal für die mathematische Recheneinheit erzeugt wird und daß aus der Rotorfrequenz und dem Steuersignal des Addierers ein Steuersignal für einen Frequenzabsolutwert- und Magnetisierungsstromregler unter Berücksichtigung einer Korrekturfrequenz des Frequenzabsolutwert- und Magnetisierungsstromreglers und des eingestellten Betriebsmodus berechnet wird, wobei durch den Frequenzabsolutwert- und Magnetisierungsstromregler der Blindstrom errechnet und das Blindstromschaltsignal für die mathematische Recheneinheit erzeugt wird.

In weiterer Ausgestaltung ist vorgesehen, daß das Flip-Flop durch den von der Wirkleistung beeinflußten Komparator gesetzt wird und daß aus einer zweiten Differenzfrequenz des PI-Reglers und dem digitalisierten Steuersignal ein Rücksetzsignal über einen Wellenfrequenzdetektor für das Flip-Flop ermittelt wird, daß das Flip-Flop im gesetzten Zustand über das Ausgangssignal den PI-Regler zurücksetzt und das Stromgrenzsignal setzt, welches im gesetzten Zustand der Stromregelungs- und Zündlogik einen vorgewählten Stromgrenzwert und im ungesetzten Zustand den berechneten Stromgrenzwert zur Weiterverarbeitung übermittelt, daß eine von der Meßvorrichtung zusätzlich gemessene Statorfrequenz einer Umschaltlogik der Regelungslogik zugeführt wird, welcher weiterhin die Rotorfrequenz die minimal zulässige Flußamplitude und der interne Drehzahlsollwert zur Ermittlung eines zweiten Stromgrenzsignales, welches über ein Oder-Gatter der Stromregelungs- und Zündlogik zugeführt wird und ein Signal für den Addierer und einem weiteren Addierer mit einer Rückkopplung der dynamischen Statorfrequenz auf die Umschaltlogik zugeführt wird und daß die Rotorfrequenz einer Vorzeicheneinheit und dem Addierer zugeführt wird, wobei durch die Vorzeicheneinheit unter Berücksichtigung der absoluten maximalen dynamischen Statorfrequenz eine Regelgröße für den Addierer zugeleitet wird, daß über einen Geber die aktuelle digitalisierte Wellenposition erfaßt wird und unter Berücksichtigung eines digitalisierten Drehzahlsollwertes zur Erzeugung einer Regelgröße für die Stromregelungs- und Thyristorzündlogik herangezogen wird und daß im Lastbetrieb über den auftretenden Positionsfehler der Wellenposition das Gegenmoment durch eine drehende Stromfeldamplitude mit einer Frequenz von einigen Hertz aufgebaut wird.

Desweiteren ist vorgesehen, daß in beiden Drehrichtungen des Asynchronmotors bei niedriger Drehzahl oder Drehzahl null durch die P-Komponente des umschaltbaren PI/I-Reglers eine Strompendelung mit einer durch die Schaltlogik vorgegebenen Eigenfrequenz vorgenommen wird und daß eine Regelung des Asynchronmotors über die Regelungslogik bei der Verwendung von GTO's, Transitoren oder Thyristoren und einem Chopper im Gleichstromzwischenkreis mit einem $30°$-Feldsprung vorgenommen wird, so daß eine Momentenpendelung mit niedriger Amplitude erreicht wird, die zu einer verbesserten Betriebsweise in der Nähe des Drehzahlbereiches null führt.

Die Erfindung führt desweiteren eine Schaltungsanordnung zum Betrieb eines Asynchronmotors, insbesondere mit einem kurzgeschlossenen Käfigläufer, mit einem dem Drehstromnetz zugeordneten Brückengleichrichter und einem über eine Meßvorrichtung dem Asynchronmotor zugeordneten I-Umrichter auf, wobei in Ausgestaltung der Erfindung vorgesehen ist, daß der Brückengleichrichter am Gleichstromausgang eine parallel geschaltete Kommutierungseinheit aufweist, die eine Kommutierung des Motorstromes ganz oder zumindest teilweise vom I-Umrichter übernimmt und daß die Meßvorrichtung zwischen I-Umrichter und Asynchronmotor der Schaltlogik als Meßwerte den Motorstrom und die Motorinduktionsspannung übermittelt und daß ein extern eingestellter Drehzahlsollwert vorgebbar ist.

Durch eine Kommutierung des Motorstromes ganz oder zumindestens teilweise in einer Kommutierungseinheit besteht die bereits aufgeführte Möglichkeit, daß die Schaltungsausführung für jeden beliebigen Asynchronmotor verwendet werden kann. Zur Steuerung des Asynchronmotors ist lediglich eine Erfassung der Motorstrom- und Motorspannungswerte notwendig. Durch die Schaltlogik mit einer mathematischen Recheneinheit, einer Regelungslogik und einer Stromregelungs- und Thyristorzündlogik wird eine selbständige Steuerung des Asynchronmotors erzielt, die lediglich die Vorgabe eines Drehzahlsollwertes erforderlich macht. Die Regelungslogik ist hierbei in der Lage, die Statorfrequenz und die Wellendrehzahl selbsttätig und unabhängig zu ermitteln.

In einer ersten Ausführungsform ist vorgesehen, daß der I-Umrichter aus jeweils zwei in Reihe geschalteten Thyristoren und Sperrdioden für jede Phase des Drehstromausganges mit Löschungskondensatoren besteht und die gemeinsamen Anoden und Kathoden mit dem Gleichstromzwischenkreis verbunden sind und die Löschungskondenstoren im I-Umrichter jeweils mit zwei Kathoden der Thyristoren verbunden und zur Löschung der Thyristoren vorgesehen sind.

In einer zweiten Ausführungsform ist vorgesehen, daß der I-Umrichter für jede Phase des Drehstromausganges zwei Transistoren aufweist, die über den Emitter des ersten Transistors und den Kollektor des zweiten Transistors miteinander und mit den Anschlüssen des Asynchronmotors verbunden sind, wobei die Kollektoren des ersten Transistors und die Emitter des zweiten Transistors mit dem Gleichstromzwischenkreis verbunden sind und jeweils eine Sperrdiode im Emitter- oder Kollektoreingang der Transistoren vorgesehen ist und daß jeweils eine weitere Sperrdiode zwischen Kollektor und Emitter in Sperrichtung geschaltet ist.

In einer dritten Ausführungsform der Erfindung ist vorgesehen, daß der I-Umrichter aus jeweils zwei in

EP 0 455 148 A2

Reihe geschalteten GTO's für jede Phase des Drehstromausganges besteht und die gemeinsamen Anoden und Kathoden mit dem Gleichstromzwischenkreis verbunden sind.

In einer weiteren Ausführungsform der Erfindung ist vorgesehen, daß der I-Umrichter aus jeweils zwei in Reihe geschalteten Thyristoren für jede Phase des Drehstromausganges besteht und die gemeinsamen Anoden und Kathoden mit dem Gleichstromzwischenkreis verbunden sind und daß der Gleichstromzwischenkreis einen zur Drossel in Reihe geschalteten Zerhacker und einen zur Drossel antiparallel geschalteten Schalter in Form eines Thyristor, eines GTO's oder eines Transistors mit in Reihe geschalteter Diode aufweist.

Die aufgeführten Varianten des I-Umrichters sind mit einer Kommutierungseinheit ausgestattet, die zumindestens einen Teil der Stromkommutierung übernimmt und somit den Einsatz aller gebräuchlichen Schaltungselemente ermöglicht.

In weiterer Ausgestaltung der Erfindung ist vorgesehen, daß die Kommutierungseinheit ein Kondensator oder eine Batterie ist und daß die Thyristoren oder Transistoren des I-Umrichters, des ersten Brückengleichrichters und des Wechselrichters von der Schaltlogik steuerbar sind, wobei ggf. bei der Verwendung einer thyristorbeschalteten Drossel und eines Zerhackers im Gleichstromzwischenkreis, diese ebenfalls von der Schaltlogik angesteuert werden.

Die Schaltlogik umfaßt eine Stromregelungs- und Thyristorzündlogik, eine Regelungslogik, eine mathematische Recheneinheit und einen Drehzahlsollwertgeber mit einer Sollwertanpassung.

Die vorteilhafte Ausgestaltung der Regelungslogik und der mathematischen Recheneinheit ergeben sich aus den weiteren Unteransprüchen.

In weiterer Ausgestaltung der Erfindung ist vorgesehen, daß die gesamte Schaltlogik durch einen Mikroprozessor und/oder analogen/digitalen Signalprozessor ersetzbar ist.

Die Schaltungsanordnung wird anhand der nachfolgenden Figurenbeschreibung näher erläutert.

Es zeigt

Figur 1    ein vereinfachtes Blockschaltbild der Schaltungsanordnung für einen Asynchronmotor,

Figur 2    ein erweitertes Blockschaltbild gemäß Figur 1,

Figur 3    ein erweitertes Blockschaltbild gemäß Figur 1,

Figur 4    ein Blockschaltbild der Netzspeiseeinrichtung,

Figur 5    ein Blockschaltbild der ersten Ausführungsform des Leistungsteils mit Stromkommutierung,

Figur 6    ein Blockschaltbild einer weiteren Ausführungsform des Leistungsteils mit Stromkommutierung,

Figur 7    ein Blockschaltbild der Stromregelungs- und Thyristorzündlogik,

Figur 8    ein Blockschaltbild der mathematischen Einheit,

Figur 9    ein Blockschaltbild der Regelungslogik für die Verwendung mit der ersten Ausführung des I-Umrichters gemäß Figur 1,

Figur 10   ein weiteres Blockschaltbild der Regelungslogik für die Verwendung mit der Ausführung des I-Umrichters gemäß Figur 2,

Figur 11   ein weiteres Blockschaltbild der Regelungslogik für die Verwendung mit der Ausführung des I-Umrichters gemäß Figur 3,

Figur 12   eine Darstellung der Regelvarianten für den Asynchronmotor,

Figur 13   ein Stromvektor-Arbeitsdiagramm,

Figur 14   ein Spannungs-Strom-Flußdiagramm des Asynchronmotors,

Figur 15   ein Zeitablaufdiagramm der Regelungslogik,

Figur 16   eine Logiktabelle, der die Steuerung beeinflussenden Regelgrößen entnehmbar ist,

Figur 17   ein Ausschnitt des Leistungsteils mit Thysistoren zur Stromkommutierung und einem eingezeichneten Stromverlauf während der Kommutierungsphase.

Figur 18   eine weitere Variante des Leistungsteils mit GTO's und einem eingezeichneten Stromverlauf während der Kommutierungsphase,

Figur 19   eine weitere Variante des Leistungsteils mit Thyristoren und Chopper und einem eingezeichneten Stromverlauf während der Kommutierungsphase.

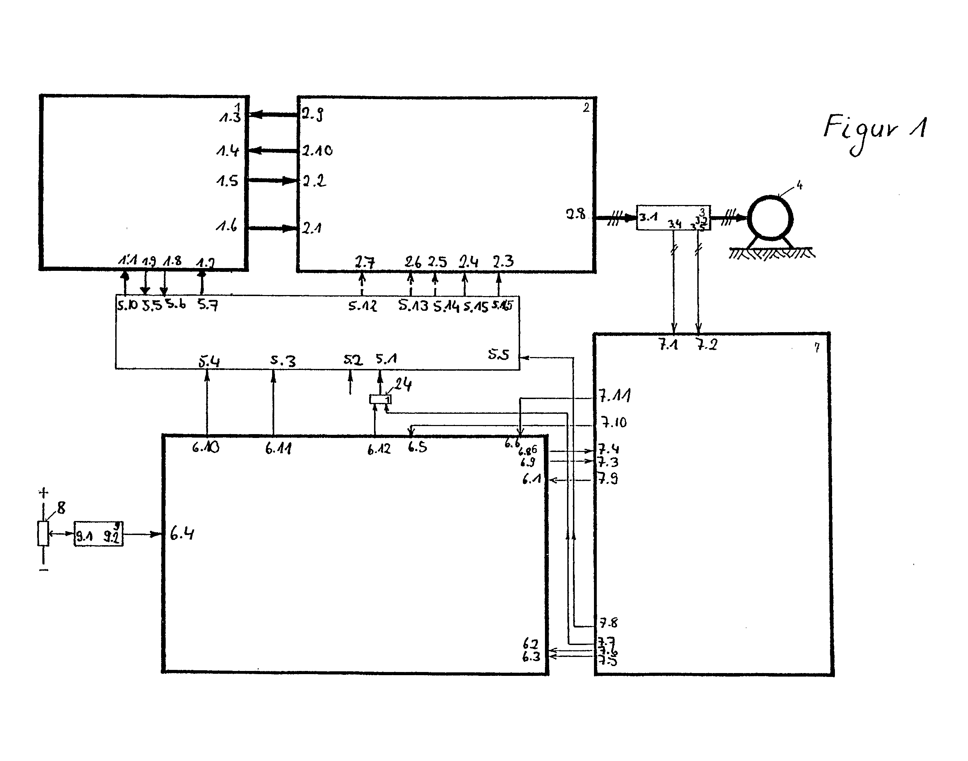

In Figur 1 bis 3 ist jeweils ein vereinfachtes Blockschaltbild der Schaltungsanordnung für ein Asynchronmotor 4 dargestellt. Der Asynchronmotor 4 wird vom Netz über die Netzspeiseeinrichtung 1 und ein Leistungsteil 2 mit Stromkommutierung gespeist, wobei eine Meßvorrichtung 3 die aktuellen Spannungs- und Strommeßwerte in den Zuleitungen des Asynchronmotors 4 aufnimmt. Die Spannungs- und Stromwerte werden einer mathematischen Einheit 7 zugeführt, die in Zusammenarbeit mit einer Regelungslogik 6 die Stromregelungs- und Thyristorzündlogik 5 ansteuert. Die Stromregelungs- und Thyristorzündlogik 5 steuert hierbei die Thyristoren, GTO's oder Transistoren des Leistungsteils 2 sowie die Thyristoren der Netzspeiseeinrichtung 1 an. Zur Vorgabe eines externen Drehzahlsollwertes $f_s$ ist ein Drehzahl-Sollwertgeber 8

5

vorgesehen, der über eine Sollwertanpassung 9 den internen Drehzahlsollwert $f_w$ derRegelungslogik 6 zur Steuerung übermittelt.

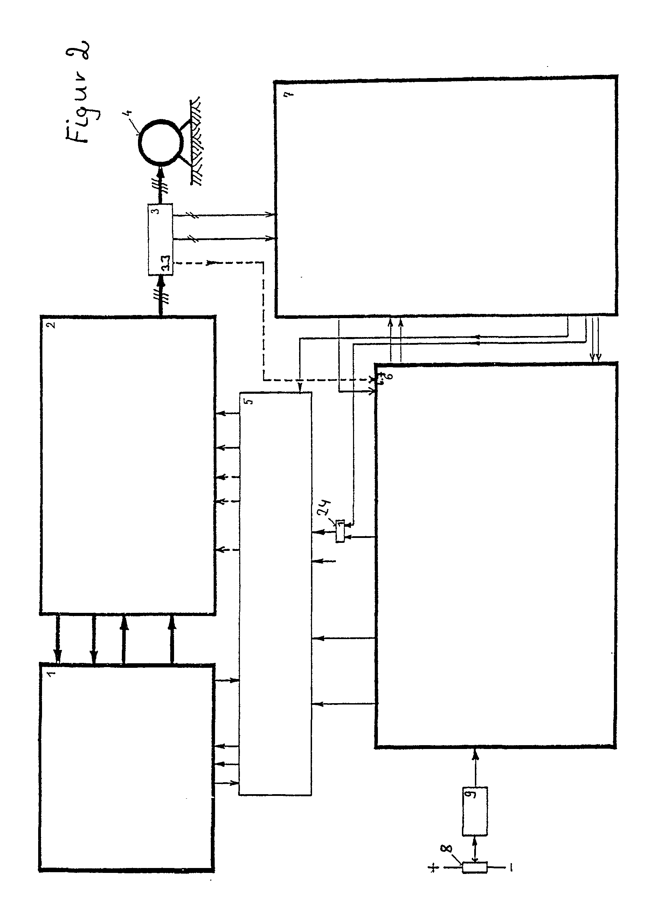

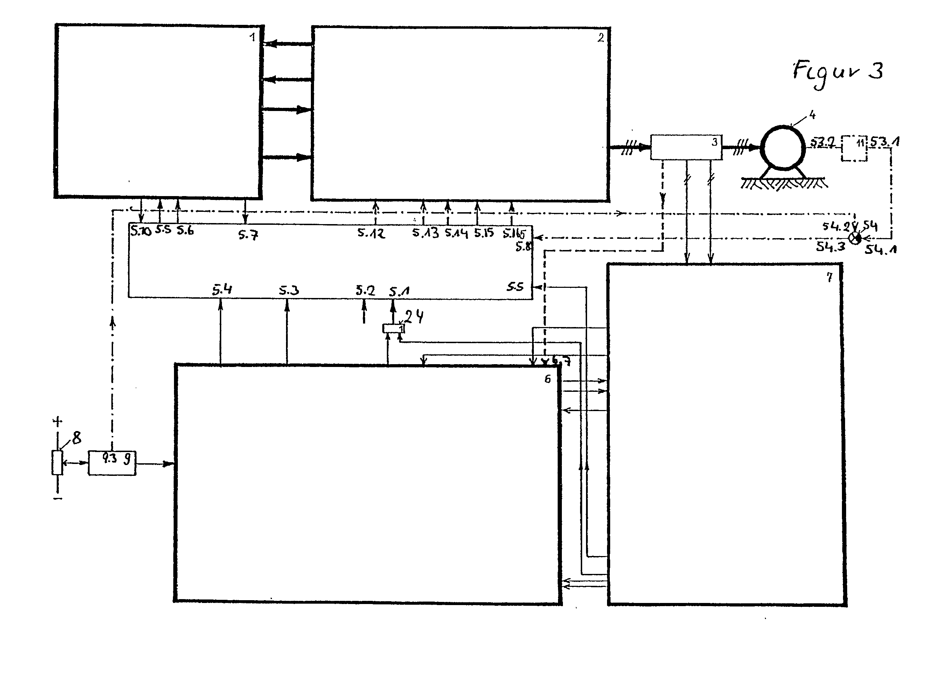

Figur 2 zeigt eine Ausführungsform der Schaltungsanordnung für einen Asynchronmotor 4 mit einer zusätzlichen Erfassung und Berechnung der Statorfrequenz $f_1^*$ durch die Meßvorrichtung 3, die einer Umschaltlogik 40 der Regelungslogik 6 im weiteren zugeführt wird. Durch die Umschaltlogik 40 wird hierbei das Stromgrenzsignal $I_{k2}$ gesetzt, welches zur Steuerung des Zündverhaltens der Stromregelungs- und Zündlogik 5 alternativ herangezogen wird. In Figur 3 wird über einen Geber 53 die Wellenposition erfaßt und einem Digitaladdierer 54 über den Eingang 54.1 zusätzlich zugeführt. Der Eingang 54.2 des Digitaladdierers 54 wird mit dem digitalisierten Drehzahlsollwert $f_s^D$ beaufschlagt. Der Ausgang 54.3 des Digitaladdierers 54 ist mit dem Eingang 5.8 der Stromregelungs- und Thyristorzündlogik 5 verbunden und beeinflußt ebenfalls die Steuerung des Leistungsteils 2. Die in den Figuren 2, 3 dargestellte Schaltungsanordnung ist hierbei als wahlweise Erweiterung vorgesehen, die teilweise zu einer Reduzierung der Bauelemente in der Regelungslogik 6 führt und eine Positionsregelung der Welle ermöglicht. Eine grundsätzliche Erfassung der Statorfrequenz $f_1^*$ und der Wellenposition ist für die Schaltungsanordnung gemäß Figur 1 jedoch nicht erforderlich, weil die Regelungslogik 6 eine selbsttätige und unabhängige Ermittlung der aktuellen Statorfrequenz $f_1^*$ und der Wellenposition ermöglicht und die Stromgrenzsignale $I_{k1}$, $I_{k2}$ setzt, wobei die Wahl eines externen Stromgrenzwertes $I_k$ möglich ist.

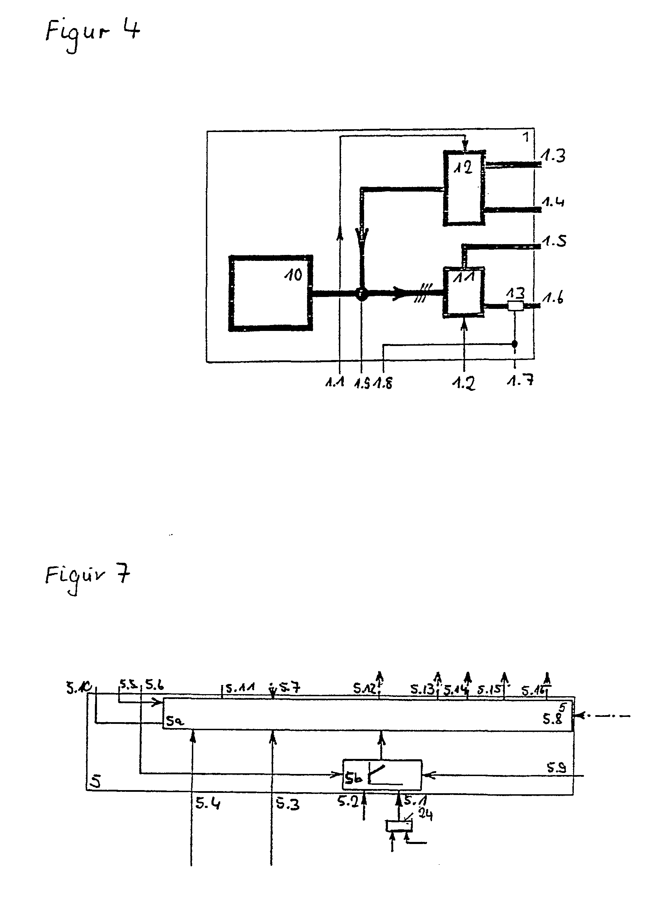

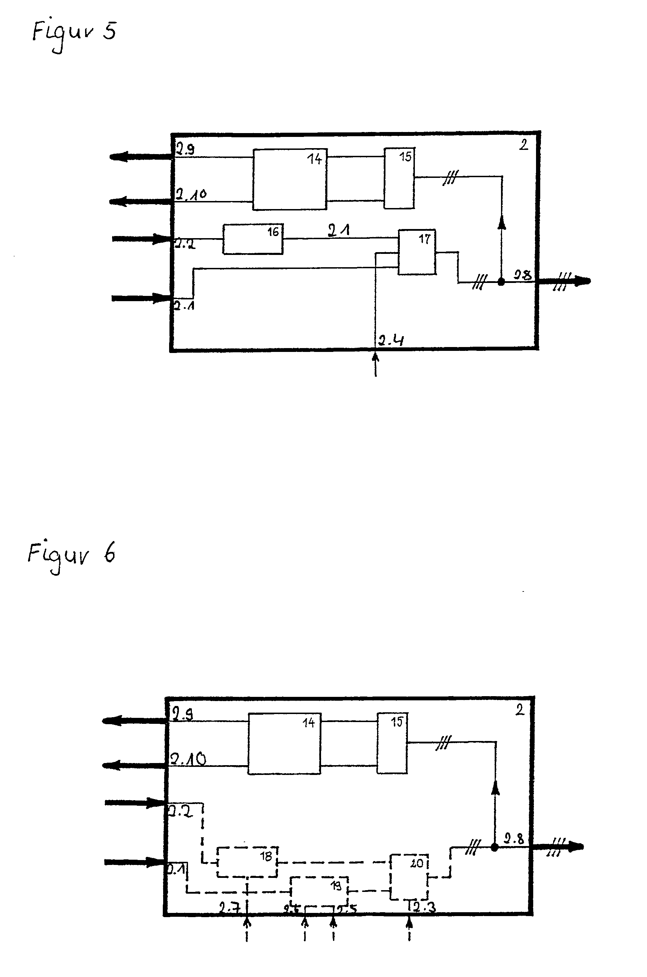

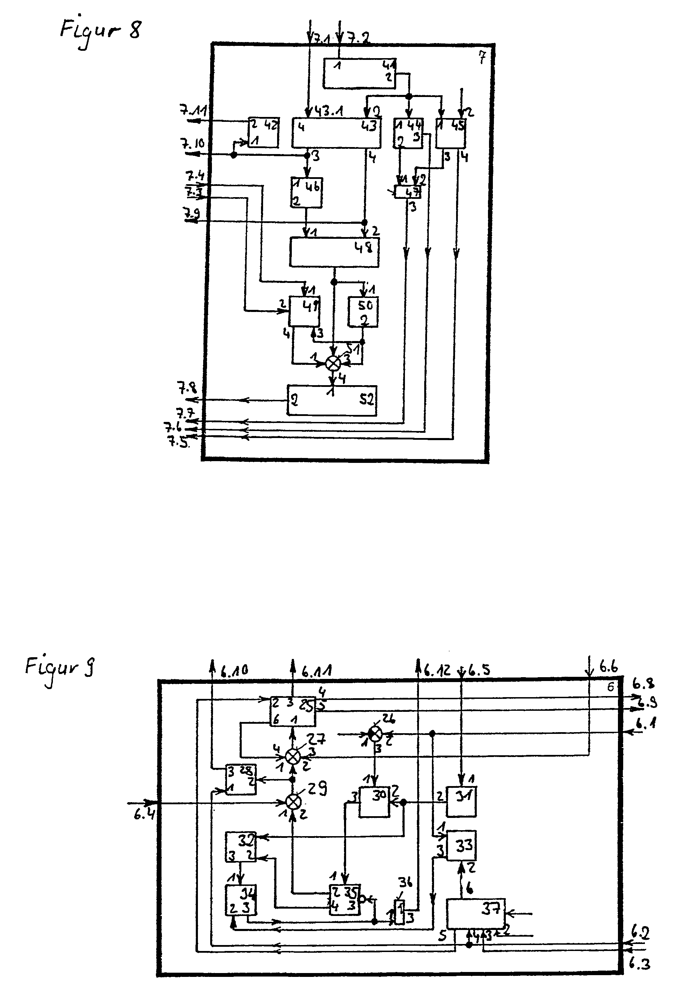

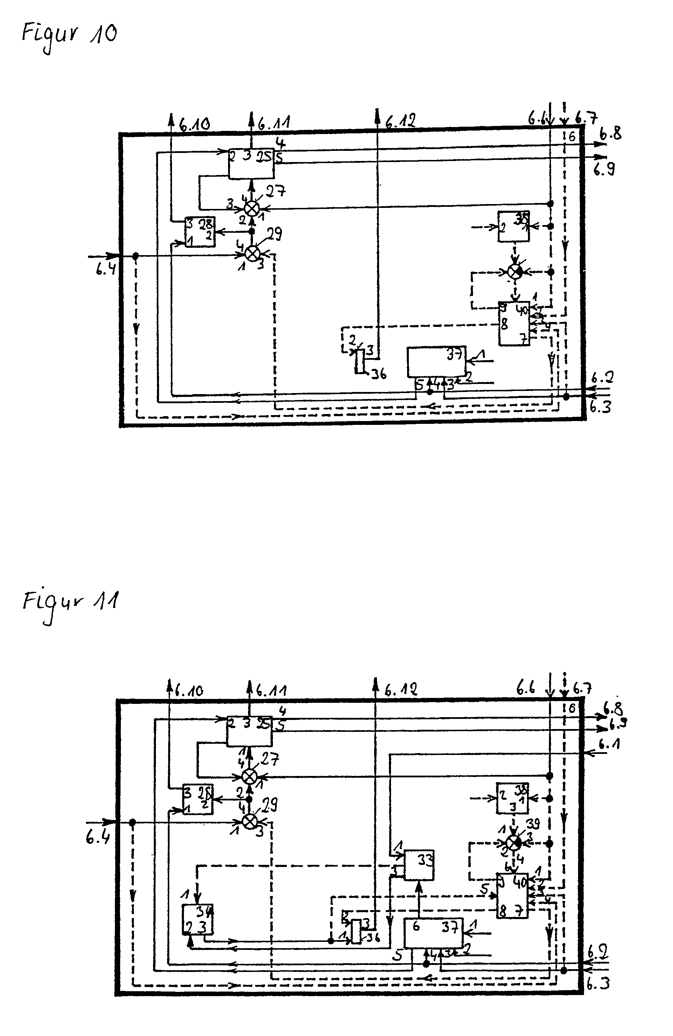

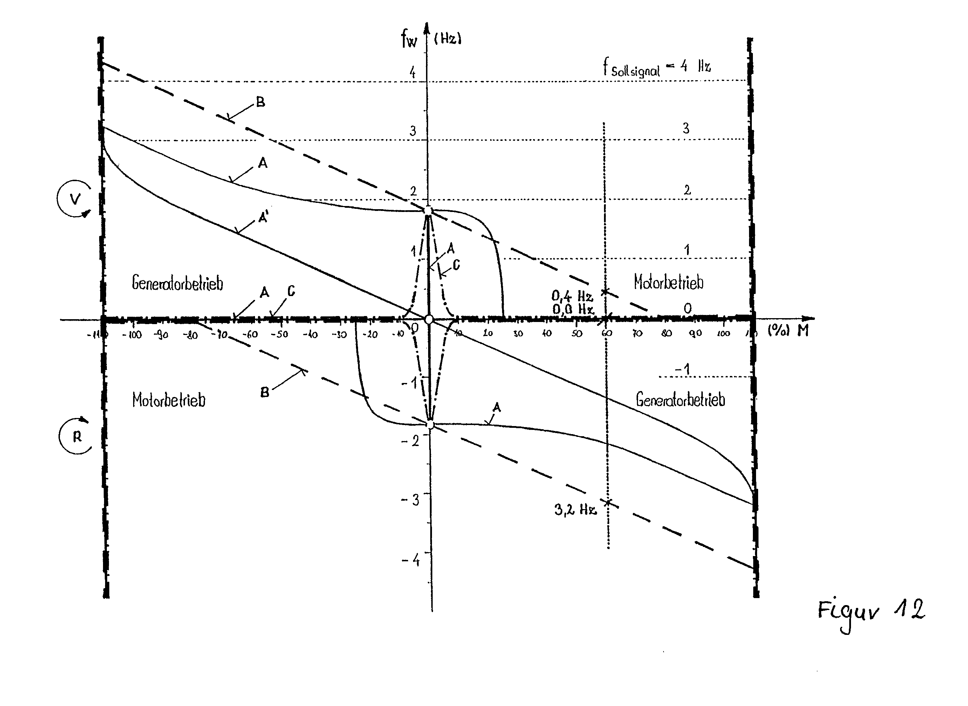

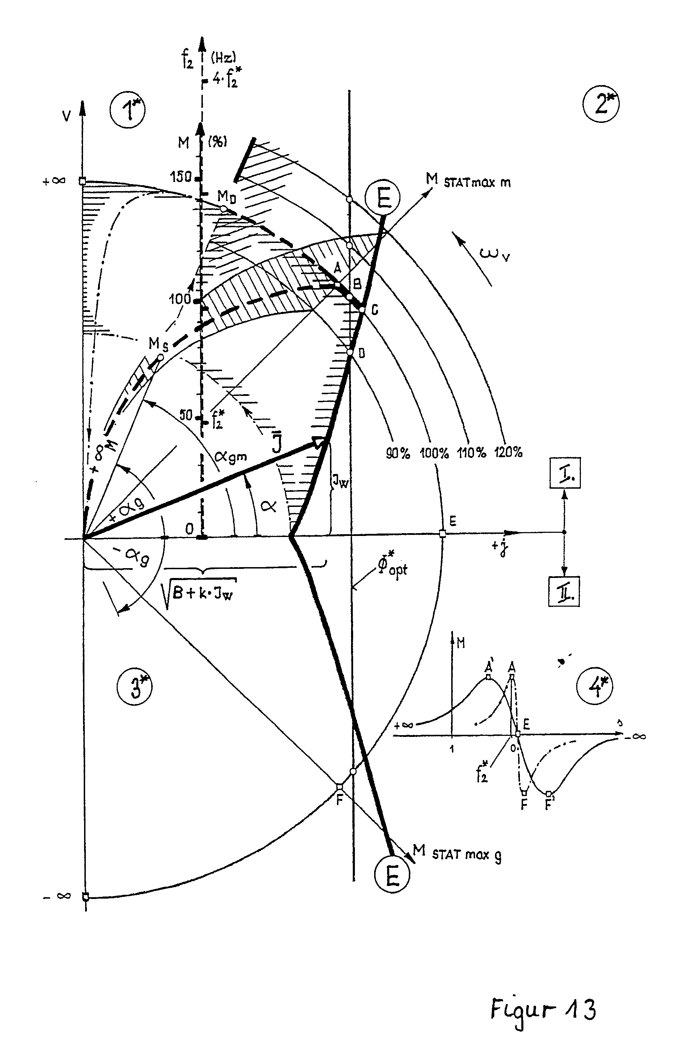

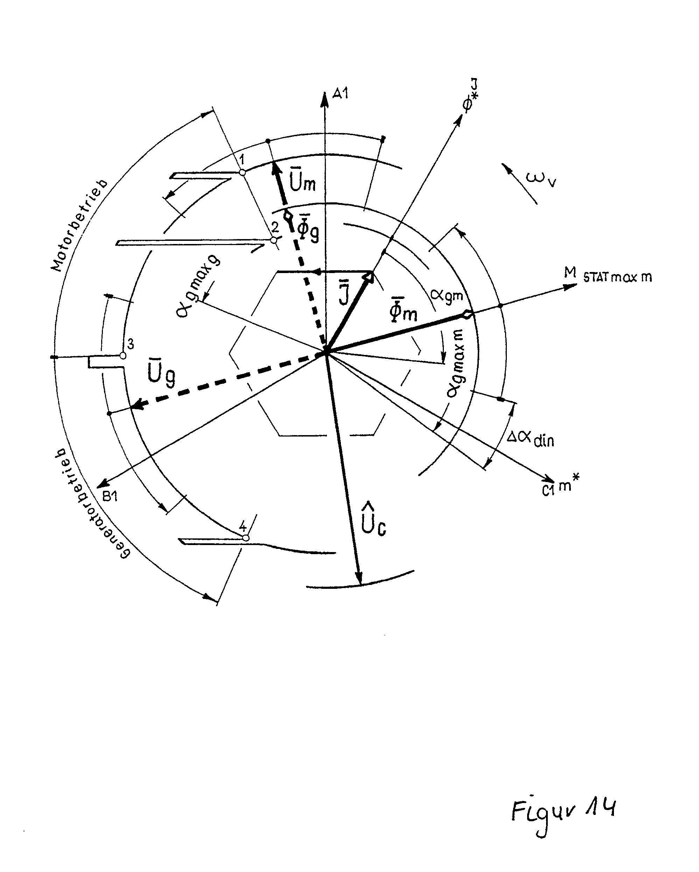

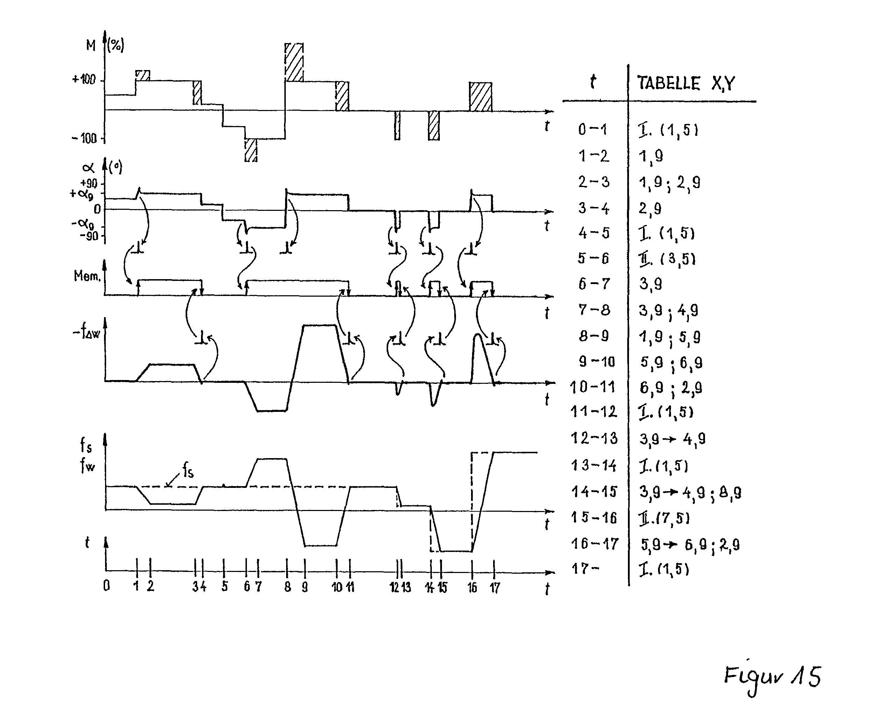

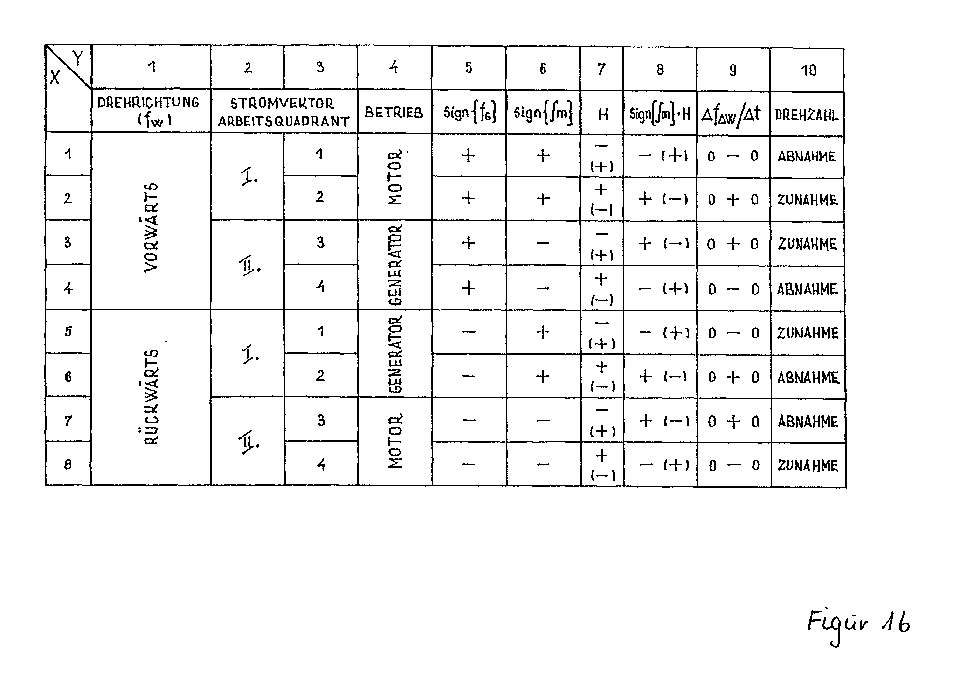

In Figur 4 ist ein Blockschaltbild der Netzspeiseeinrichtung 1 abgebildet, welche aus dem Drehstromnetz 10, einem Brückengleichrichter 11, einem Wechselrichter 12 mit Rückspeisetransformator und einem Stromgeber 13 z. B. in Form eines Shuntes besteht. Das Drehstromnetz 10 ist dreiphasig mit dem Eingang des Brückengleichrichters 11 und mit dem Ausgang des Wechselrichters 12 verbunden. Die Kathoden und Anoden des Brückengleichrichters 11 sind auf den Ausgang 1.5 bzw. 1.6 der Netzspeiseeinrichtung geführt. Die beiden Ausgänge 1.5, 1.6 sind mit dem Leistungsteil 2 verbunden und Teil eines Gleichstromzwischenkreises 21, der den Ausgang des Brückengleichrichters 11 mit dem Eingang des I-Umrichters 17, 20 verbindet. Die gemeinsamen Anoden- bzw. Kathodenanschlüsse des Wechselrichters 12 sind auf die Eingänge 1.2, 1.4 der Netzspeiseeinrichtung 1 geführt. Desweiteren weist die Netzspeiseeinrichtung 1 einen Steuereingang 1.1 für den Wechselrichter 12, einen Steuereingang 1.2 für den Brückengleichrichter 11 und einen Ausgang 1.8 für den gemessenen Stromwert $I_1$ auf.

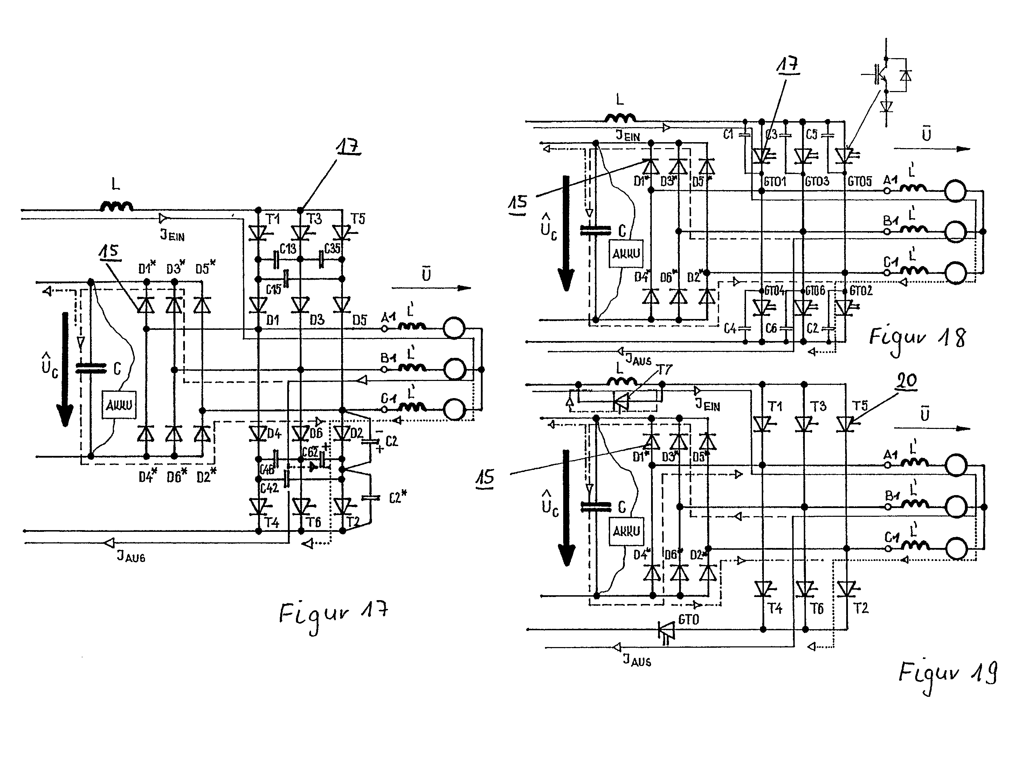

In Figur 5 ist eine erste Ausführungsform des Leistungsteils 2 dargestellt, welches aus einer Drossel 16, einem I-Umrichter 17 und einem Kommutierungs-Diodenbrückengleichrichter 15 sowie einer Kommutierungseinheit 14 besteht. Der Eingang 2.1 des Leistungsteils 2 ist mit den Kathoden des I-Umrichters 17 verbunden, während der Eingang 2.2 über die Drossel 16 mit den Anoden des I-Umrichters 17 verbunden ist. Der Ausgang des I-Umrichters 17 ist mit dem Ausgang 2.8 des Leistungsteils 2 verbunden, welcher, wie aus der Figur 1 ersichtlich, über eine Meßvorrichtung 3 mit den dreiphasigen Zuleitungen des Asynchronmotors 4 verbunden ist. Parallel zum Ausgang des I-Umrichters 17 ist der Kommutierungs-Diodenbrückengleichrichter 15 geschaltet, dessen Ausgang mit den Ausgängen 2.9, 2.10 des Leistungsteils 2 verbunden ist, wobei parallel zu den Ausgängen 2.9, 2.10 eine Kommutierungseinheit 14 geschaltet ist.

Aus der Figur 1 ist ersichtlich, daß die Ausgänge 2.9, 2.10 des Leistungsteils 2 mit den Eingängen des Wechselrichters 12 verbunden sind. Gegenüber dem bekannten Stand der Technik weist das Leistungsteil 2 zusätzlich eine Kommutierungseinheit 14 auf. Hierdurch besteht die Möglichkeit, daß eine Kommutierung des Asynchronmotors 4 ganz oder zumindest teilweise in der Kommutierungseinheit 14 anstatt im I-Umrichter 17 vorgenommen wird. Dies bringt den wesentlichen Vorteil mitsich, daß der I-Umrichter 17 kapazitätsmäßig nicht an den Asynchronmotor 4 angepaßt zu werden braucht, so daß die Schaltungsanordnung für jeden beliebigen Asynchronmotor 4 verwendet werden kann, wobei lediglich die Umrichternennleistung beachtet werden muß. Die Kommutierungseinheit 14 kann hierbei aus einem Kondensator oder einer Batterie bestehen. Im I-Umrichter 17 können hierbei herkömmliche Thyristoren, Transistoren oder steuerbare GTO's eingesetzt werden. Bei der Verwendung von Thyristoren sind Löschungskondensatoren im I-Umrichter 17, 20 vorzusehen, wobei das Kapazitätsverhältnis der Löschungskondensatoren und der Kommutierungseinheit 14 den Anteil des Kommutierungsstromes in der Kommutierungseinheit 14 bestimmt. Der genaue Stromfluß im I-Umrichter 17 und im Kommutierungs-Diodenbrückengleichrichter 15 ist aus der Figur 17 bis 19 ersichtlich.

In Figur 6 ist eine weitere Ausführungsform des Leistungsteils 2 dargestellt, welche einen I-Umrichter 20 aufweist, der mit Thyristoren ausgestattet ist. Im Gleichstromzwischenkreis 21, der die Eingänge 2.1, 2.2 des Leistungsteils 2 mit den Eingängen des I-Umrichters 20 verbindet ist ein Zerhacker 19 mit einer thyristorbeschalteten Drossel 18 in Reihe geschaltet. Der steuerbare Zerhacker 19 wird über die Eingänge 2.5, 2.6 angesteuert, während der I-Umrichter 20 über den Eingang 2.3 des Leistungsteils 2 angesteuert wird. Der Zerhacker 19 wird hierbei zur Löschung der Thyristoren im I-Umrichter 20 verwendet. Die Drossel 18 weist einen antiparallel geschalteten Thyristor auf, der über den Eingang 2.7 des Leistungsteils 2 angesteuert wird, welcher die im Falle des Unterbrechens des Gleichstromzwischenkreises 21 gespeicherte Induktionsenergie der Drossel 18 in den Asynchronmotor 4 zurückspeist. Die noch zu beschreibende Regelungslogik 6 und mathematische Recheneinheit 7 sowie die Stromregelungs- und Thyristorzündlogik 5 können für beide Varianten des Leistungsteils 2 eingesetzt werden.

In Figur 7 ist die Stromregelungs- und Thyristorzündlogik 5 dargestellt, welche aus der Zündlogik 5a und der Stromregelung 5b besteht. Die Zündlogik 5a steuert über die Ausgänge 5.11 und 5.15 die Thyristoren des Brückengleichrichters 11 bzw. des I-Umrichters 17 gemäß der Figur 5 an. Alternativ besteht die Möglichkeit, daß über die Ausgänge 5.12, 5.13, 5.14 und 5.16 das Leistungsteil 2 gemäß der Figur 6 angesteuert wird. Der Zündlogik 5b wird über den Eingang 5.5 die Netzspannung und über die Eingänge 5.3 und 5.4 die dynamische Statorfrequenz $f_1$ bzw. das Vorwärts-Rückwärtssignal V, R zugeführt. Über den Eingang 5.9 wird der berechnete Stromgrenzwert $I_s$ und über den Eingang 5.6 der gemessene Strom $I_1$ im Gleichstromzwischenkreis 21 der Stromregelung 5b zugeführt. Ferner wird die Stromregelung 5b über den Eingang 5.2 mit einem extern vorwählbaren Stromgrenzwert $I_k$ und über den Eingang 5.1 mit einem über ein Oder-Gatter 24 geführten Stromgrenzsignal $I_{k1}$ der mathematischen Recheneinheit 7 oder alternativ mit einem Stromgrenzsignal $I_{k2}$ der Regelungslogik 6 beaufschlagt. Wenn eines der beiden Stromgrenzsignale $I_{k1}$ oder $I_{k2}$ gesetzt ist, wird hierbei der eingestellte Stromgrenzwert $I_k$ berücksichtigt, im anderen Fall der berechnete Stromgrenzwert $I_s$.

Die Stromregelung 5b ermittelt aus dem gemessenen Strom $I_1$ sowie den vorgegebenen Signalen $I_k$, $I_{k1}$, $I_{k2}$ ein für die Regelung und Ansteuerung der Thyristoren notwendiges Steuersignal der Zündlogik 5a.

Alternativ besteht gemäß Figur 3 die Möglichkeit, daß der Zündlogik 5a weiterhin ein digitalisierter interner Drehzahlsollwert $f_w^D$ vorgegeben wird, der unmittelbar der Stromregelungs- und Zündlogik 5 über den Eingang 5.8 zugeführt wird.

In Figur 8 ist die mathematische Recheneinheit 7 dargestellt, welche aus einem Filter 41 mit Integrator, einem Filter 42, einem Vektormultiplikator 43, einem Flußfrequenzgeber 44, einem Flußamplitudengeber 45, einem Filter 46, einem Oder-Gatter 47, einem analogen Dividierer 48, einem analogen Schalter 49, einem analogen Addierer 50, 51 und einem analogen Radizierer 52 besteht. Über die Eingänge 7.1, 7.2 wird der mathematischen Recheneinheit 7 der Motorstrom bzw. die Motorinduktionsspannung des Asynchronmotors 4 zugeführt. Ferner wird über den Eingang 7.3 das Blindstromschaltsignal SB und über den Eingang 7.4 der berechnete Blindstromwert $I_B$ von der Regelungslogik 6 zugeführt. Die interne Verschaltung der mathematischen Recheneinheit 7 ist hierbei folgendermaßen ausgeführt. Der Eingang 7.1 ist auf den Eingang 43.4 des Vektormultiplikators 43 geführt, während der Eingang 7.2 auf den Eingang 41.1 des Filters 41 geführt ist. Der Ausgang 41.2 des Filters 41 ist mit dem Eingang 43.2 des Vektormultiplikators 43, dem Eingang 44.1 des Flußfrequenzgebers 44 und dem Eingang 45.1 des Flußamplitudengebers 45 verbunden. Der weitere Eingang 45.2 des Flußamplitudengebers 45 ist mit der minimal zulässigen Flußamplitude $|\phi|_{min}$ beaufschlagt. Der Ausgang 45.3 ist auf den Eingang 47.2 des Oder-Gatters 47 geführt, während der Ausgang 45.4 des Flußamplitudengebers 45 mit dem Ausgang 7.5 der mathematischen Recheneinheit 7 verbunden ist. Der Ausgang 44.2 des Flußfrequenzgebers 44 ist mit dem Eingang 47.1 des Oder-Gatters 47 verbunden, dessen Ausgang 47.3 mit dem Ausgang 7.7 der mathematischen Recheneinheit 7 verbunden ist. Der Ausgang 44.3 des Flußfrequenzgebers ist mit dem Ausgang 7.6 der mathematischen Recheneinheit 7 verbunden. Der Ausgang 43.3 des Vektormultiplikators 43 ist mit dem Eingang 46.1 des Filters 46 und dem Eingang 42.1 des Filters 42 sowie dem Ausgang 7.10 der mathematischen Recheneinheit 7 verbunden. Ferner ist der Ausgang 42.2 des Filters 42 mit dem Ausgang 7.11 der mathematischen Recheneinheit 7 verbunden. Der Ausgang 46.2 des zweiten Filters 46 ist auf den Eingang 48.1 des analogen Dividierers 48 geschaltet, dessen zweiter Eingang 48.2 mit dem Ausgang 43.4 des Vektormultiplikators 43 und dem Ausgang 7.9 der mathematischen Recheneinheit 7 verbunden ist. Der Ausgang 48.3 des analogen Dividierers 48 ist mit dem Eingang 50.1 des analogen Addierers 50 und dem Eingang 51.2 des Addierers 51 verbunden. Die Eingänge 49.1 und 49.2 des analogen Schalters 49 sind mit den Eingängen 7.3 bzw. 7.4 der mathematischen Recheneinheit 7 und der Eingang 49.3 mit dem Ausgang 50.2 des analogen Addierers 50 verbunden. Ferner ist der Ausgang 50.2 auf den Eingang 51.3 des Addierers 51 und der Ausgang 49.4 auf den Eingang 51.1 des Addierers 51 geführt. Der Ausgang 51.4 des Addierers 51 ist mit dem Eingang 52.1 des analogen Radizierers 52 verbunden, dessen Ausgang 52.2 mit dem Ausgang 7.8 der mathematischen Recheneinheit 7 verbunden ist. In der mathematischen Recheneinheit 7 wird aus der Motorinduktionsspannung $U_i$ die Flußamplitude $\phi$ , eine digitalisierte minimalisierte Flußamplitude $|\phi|_{min}$ und die Flußfrequenz $w_\phi$ unter Berücksichtigung einer vorgegebenen minimal zulässigen Flußamplitude $|\phi|_{min}$ sowie ein digitales Stromgrenzsignal $I_{k1}$ ermittelt.

Das Stromgrenzsignal $I_{k1}$ wird über das Oder-Gatter 24 der Stromregelung 5b zugeführt. Die digitalisierte Flußamplitude

$$\phi \overset{\mathfrak{d}}{\phantom{.}}_{min}$$

und das erste Stromgrenzsignal $I_{k1}$ werden der Regelungslogik 6 zugeführt, wobei das Stromgrenzsignal $I_{k1}$ aus der Flußfrequenz $w_\phi$ und der Flußamplitude gebildet wird. Ferner wird in der mathematischen Recheneinheit 7 aus dem Motorstrom I und der Motorinduktionsspannung $U_i$ das Moment m, $m^*$ berechnet und der Regelungslogik 6 zugeführt. Über das Filter 42 wird die Rotorfrequenz $f_2$ ermittelt und der Regelungslogik 6 ebenfalls zugeführt. Desweiteren wird in der mathematischen Recheneinheit 7 in Abhängigkeit der Betriebsart A, B, C die Berechnung des Stromsollwertes $I_s$ festgelegt, wobei die mathematische Einheit über ein Blindstromschaltsignal SB der Regelungslogik angesteuert wird und eine Berechnung des Stromsollwertes $I_s$ aus dem Blindstrom $I_B$ und dem Wirkstrom $I_w$ nach

$$I_s = \sqrt{B + I_w^2 + kI_w}$$

festlegt, wobei k ein konstanter einstellbarer Parameter ist und wobei in der ersten Betriebsart A der Anteil B einem dem quadratischen Blindstrom $I_B^2$ entsprechenden Wert gleichgesetzt und in der Betriebsart B kleiner als der quadratische Blindstrom $I_B^2$ sowie in der Betriebsart C dem quadratischen Wirkstrom $I_w^2$ gleichgesetzt wird.

In Figur 9 ist die Regelungslogik 6 mit einer selbsttätigen Ermittlung der jeweils aktuellen Statorfrequenz $f_1^*$ und der Wellenposition dargestellt. Die Regelungslogik 6 besteht im wesentlichen aus einem Frequenzabsolutwert- und Magnetisierstromregler 25, einem Addierer 26, 27, 29, einem umschaltbaren PI/I-Regler 28, einem gesteuerten Analoginverter 30, einem Integrator 31, einem Wellenfrequenzdetektor 32, einem gesteuerten Komparator 33, einem Flip-Flop 34, einem PI-Regler 35 mit Reset, einem Oder-Gatter 36 und einer Steuerlogik 37. Die in Figur 9 dargestellte Regelungslogik 6 ist für die Schaltungsanordnung eines Asynchronmotors 4 gemäß Figur 1 vorgesehen.

Die interne Verschaltung der Regelungslogik 6 ist hierbei folgendermaßen ausgeführt. Der Eingang 6.1 der Regelungslogik 6 ist auf den Eingang 33.1 des gesteuerten Komparators 33 und auf den Eingang 26.2 des Addierers 26 geführt. Der Eingang 6.2 der Regelungslogik 6 ist auf den Eingang 37.4 der Steuerlogik 37 und auf den Eingang 28.1 des umschaltbaren PI/I-Reglers 28 geführt. Der Eingang 6.3 der Regelungslogik 6 ist auf den Eingang 37.3 der Steuerlogik 37 geführt. Der Eingang 6.4 der Regelungslogik 6 ist auf den Eingang 29.1 des Addierers 21 und der Eingang 6.5 auf den Eingang 31.1 des Integrators 31 geführt. Der Eingang 6.6 der Regelungslogik 6 ist auf den Eingang 27.3 des Addierers 27 geführt. Die Steuerlogik 37 wird über den Eingang 37.1 mit einem extern wählbaren Betriebsmodus A, B, C und über den Eingang 37.2 mit einem Momentenwinkelgrenzwert $\alpha_g$ beaufschlagt. Der Ausgang 37.5 der Steuerlogik 37 ist auf den Eingang 25.2 des Frequenzabsolutwert- und Magnetisierstromreglers 25 geführt, während der Ausgang 37.6 auf den Eingang 33.2 des gesteuerten Komparators 33 geführt ist. Der Ausgang 33.3 des Komparators 33 ist auf den Eingang 34.2 des Flip-Flops 34 geführt, dessen Eingang 34.1 mit dem Ausgang 32.3 des Wellenfrequenzdetektors 32 verbunden ist. Der Ausgang 31.2 des Integrators 31 ist auf den Eingang 30.2 des gesteuerten Analoginverters 30 und auf den Eingang 32.1 des Wellenfrequenzgebers 32 geführt. Ferner ist der Eingang 30.1 des gesteuerten Analoginverters 30 mit dem Ausgang 26.3 des Addierers 26 verbunden und der Ausgang 30.3 mit dem Eingang 35.1 des PI-Reglers 35. Der Ausgang 34.3 des Flip-Flops 34 ist mit dem Eingang 36.1 des Oder-Gatters 36 und dem Eingang 35.3 des PI-Reglers 35 verbunden, dessen Ausgang 35.2 mit dem Eingang 29.2 des Addierers 29 verbunden ist, während der Ausgang 35.4 mit dem Eingang 34.2 des Wellenfrequenzdetektors 32 verbunden ist. Der Ausgang 36.3 des Oder-Gatters 36 ist mit dem Ausgang 6.12 der Regelungslogik 6 verbunden und wird im weiteren mit dem Eingang 24.2 des Oder-Gatters 24 verbunden. Der Addierer 26 ist über den Eingang 26.1 mit einem einstellbaren optimalen Wirkleistungswert

$$\phi \overset{*}{\phantom{.}}_{opt}$$

beaufschlagt. Der Ausgang 29.3 des Addierers 29 ist mit dem Eingang 28.2 des umschaltbaren PI/I-Reglers 28 und dem Eingang 27.2 des Addierers 27 verbunden. Der Ausgang 28.3 des PI/I-Reglers 28 ist mit dem Ausgang 6.10 der Regelungslogik 6 verbunden und wird im weiteren der Stromregelungs- und Thyristorzündlogik 5 zugeführt. Der Ausgang 27.4 des Addierers 27 ist auf den Eingang 25.1 des Frequenzabsolutwert- und Magnetisierstromreglers 25 geführt, dessen Ausgang 25.6 zur Rückkopplung auf den Eingang 27.4 des Addierers 27 geführt ist. Die Ausgänge 25.3, 25.4, 25.5 des Frequenzabsolutwert-

und Magnetisierstromreglers 25 sind auf den Ausgang 6.11, 6.8, 6.9 der Regelungslogik 6 geführt.

Die Regelungslogik 6 ermöglicht einerseits die Ermittlung eines Stromgrenzsignales $I_{k2}$ und der aktuellen Statorfrequenz $f_1^*$, andererseits ermöglicht die Regelungslogik 6 die vollautomatische Steuerung des Asynchronmotors 4 im Bereich von 2 bis 50 Hertz nach herkömmlichem Verfahren und im Bereich von 0 bis 2 Hz nach drei unterschiedlichen Betriebsarten A, B, C mit unterschiedlichen Berechnungsvarianten des Stromsollwertes $I_s$, wie bereits aufgeführt. Eine Auswahl der entsprechenden Regelvariante wird durch die Steuerlogik 37 über den Eingang 37.1 ermöglicht, welche weiterhin mit einem vorgegebenen Momentenwinkelgrenzwert $\alpha_g$, der minimal zulässigen Flußamplitude $|\phi|_{min}$ und der Flußfrequenz $w_\phi$ beaufschlagt wird und ein Vergleichssignal $\alpha_v$ an den Komparator 33 übermittelt. Je nach ausgewählter Regelvariante wird ein entsprechendes Steuersignal an den Komparator 33 und an den Frequenzabsolutwert- und Magnetisierstromregler 25 übertragen. Der Komparator 33 ermittelt aus der anliegenden Wirkleistung $\phi^*$ ein Steuersignal zum Setzen des Flip-Flops 34, welches einerseits das Stromgrenzsignal $I_{k2}$ setzt und andererseits den PI-Regler 35 zurücksetzt. Der PI-Regler 35 ermittelt zusammen mit dem Wellenfrequenzdetektor 32 den derzeitigen Drehzahlfehler $f_{\Delta\omega}$ und setzt das Flip-Flop 34 zurück, wenn die richtige Drehzahl aufgefunden wurde. Über den Ausgang 35.2 des PI-Reglers 35 wird über den Addierer 29, welcher das Ausgangssignal mit dem internen Drehzahlsollwert $f_w$ verknüpft, auf den PI/I-Regler 28 geführt. Der PI/I-Regler 28 ermöglicht hierbei die Erkennung eines Links- oder Rechtslaufs des Asynchronmotors 4. Ferner wird über den Addierer 29 und 27 der Frequenzabsolutwert- und Magnetisierstromregler 25 angesteuert, welcher die einzustellende Statorfrequenz $f_1^*$ an die Stromregelungs- und Thyristorzündlogik 5 übermittelt.

Figur 10 zeigt eine vereinfachte Ausführungsform der Regelungslogik 6, welche zur Verwendung mit der Schaltungsanordnung gemäß Figur 2 vorgesehen ist. Durch die Erfassung der aktuellen Statorfrequenz $f_1^*$ kann hierbei eine exakte Wellenposition eingestellt werden. Die Regelungslogik 6 besteht in diesem Fall aus dem Frequenzabsolutwert- und Magnetisierstromregler 25, den Addierern 24, 29, dem umschaltbaren PI/I-Regler 28, dem Oder-Gatter 36, der Steuerlogik 37 und als weiteren Bauelementen aus einer Vorzeicheneinheit 38, einem Addierer 39 und einer Umschaltlogik 40. Die Statorfrequenz $f_1^*$ wird über den Eingang 6.7 der Regelungslogik 6 auf den Eingang 40.2 der Umschaltlogik 40 geführt. Ferner wird der Umschaltlogik 40 über den Eingang 40.1 die Rotorfrequenz $f_2$, über den Eingang 40.3 die minimal zulässige Flußamplitude $|\phi|_{min}$ und über den Eingang 40.4 der interne Drehzahlsollwert $f_w$ zugeführt. Der Ausgang 40.9 ist auf den Eingang 39.2 des Addierers 39 geführt, über dessen Ausgang 39.4 eine Rückkopplung auf den Eingang 40.6 der Umschaltlogik 40 erfolgt. Der Ausgang 40.8 ist mit dem Eingang 36.2 des Oder-Gatters 36 verbunden und übergibt das Stromgrenzsignal $I_{k2}$ an die Stromregelungs- und Thyristorzündlogik 5 über den Ausgang 6.12 der Regelungslogik 6. Der Ausgang 40.7 der Umschaltlogik 40 ist auf den Eingang 40.3 des Addierers 29 geführt und ermöglicht die Feststellung der Abweichung zwischen dem internen Drehzahlsollwert $f_w$ undder ermittelten Drehzahl zur Übermittlung an den PI/I-Regler 28 und über den Addierer 27 an den Frequenzabsolutwert- und Magnetisierstromregler 25. Die Vorzeicheneinheit 38 wird über den Eingang 38.1 mit der Rotorfrequenz $f_2$ und über den Eingang 38.2 mit einer vorgegebenen maximalen Differenzfrequenz $\Delta f_{max}$ beaufschlagt. Die Vorzeicheneinheit 38 ist über den Ausgang 38.3 mit dem Eingang 39.1 des Addierers 39 verbunden.

In Figur 11 ist eine weitere Ausführungsform der Regelungslogik 6 dargestellt, die für die Verwendung mit der Schaltungsausführung gemäß Figur 3 vorgesehen ist. Die Regelungslogik 6 weist gegenüber der in Figur 10 dargestellten Regelungslogik 6 die Bauteilkomponenten des Flip-Flops 34 und des steuerbaren Komparators 33 zusätzlich auf. Der Ausgang 34.3 des Flip-Flops 33 ist hierbei auf den Eingang 40.5 der Umschaltlogik 40 geführt und ein weiterer Ausgang 33.4 des Komparators 33 ist unmittelbar mit dem Eingang 34.1 des Flip-Flops 34 verbunden. Der gesteuerte Komparator 33 ermöglicht hierbei über das Flip-Flop 34 eine direkte Einflußnahme auf das stromgrenzsignal $I_{k2}$, wenn die Wirkleistung $\phi^*$ einen Schwellwert unterschreitet.

In Figur 12 sind die drei möglichen Regelvarianten A, B, C für den Bereich von 0 bis 2 Hertz dargestellt. Die Auswahl der Regelvariante A, B, C erfolgt je nach Anwendungsfall durch eine externe Vorgabe. Das Diagramm in Figur 12 zeigt die Drehzahl des Asynchronmotors 4 in Abhängigkeit des Lastmomentes m im generatorischen- und motorischen Betrieb und bei Links- und Rechtslauf des Asynchronmotors 4 bei einer Drehzahl-Sollwertvorgabe von 0 bis 4 Hertz. Die Regelvariante A ist durch eine durchgezogene Linie, die Regelvariante B durch eine gestrichelte Linie und die Regelvariante C durch eine Strich-Punkt-Linie dargestellt. Der kritische Bereich von 0 bis 2 Hertz wird bei der Regelvariante A durch herkömmliche Verfahren mit einem Sprung der Drehzahl von 0 auf 2 Hertz im Bereich eines Lastmomentes von m ≤ 25 % realisiert, das heißt, Werte von 0 bis 2 Hertz der Sollwertvorgabe bleiben unberücksichtigt. Diese Variante bereitet bei dem Herunterfahren des Asynchronmotors 4 mit einem anbietenden Lastmoment keine Probleme, weil der Asynchronmotor 4 ein gutes dynamisches Verhalten aufweist. Beim Herauffahren erfolgt jedoch bei einem Lastmoment von m ≤ 25 % der Nennlast ein sprungartiger Anstieg auf 2 Hz, sobald der Sollwert > 2 Hz anliegt. Bei Sollwert 0 Hz und Lastmoment m = 0 ist die Wellendrehzahl ebenfalls null. Mit ansteigenden Lastmoment erhöht sich der Drehzahlfehler gemäß der Kurve A in Figur 12.

Die Regelvariante B geht hingegen von einer annähernd linear abnehmenden oder zunehmenden Drehzahl bei einem anliegenden Lastmoment aus, wobei bei 80 % der Nennlast der Drehzahlfehler den Wert null erreicht. Hierdurch ergibt sich beispielsweise bei einer Sollwertvorgabe von 1 Hz und einem Lastmoment von 60 % im motorischen Betrieb ein Drehzahlfehler von 0 %, im generatorischen Betrieb ein Drehzahlfehler von ca. 200 %, während bei Lastmoment m = 0 ein Drehzahlfehler von ca. 100 % auftritt. Dieser lastabhängige Fehler bis zu einem Lastmoment von m ≤ 80 % wird bei der Regelvariante B akzeptiert, weil ein sprunghafter Anstieg gegenüber der Regelvariante A vermieden wird. Bei einer Drehzahlsollwertvorgabe von mehr als 2 Hertz tritt im motorischen Betrieb und bei einer Vorgabe von mehr als 4 Hertz auch im generatorischen Betrieb kein Fehler mehr auf.

Die Regelvariante C stellt im Vergleich zu A, B eine Methode dar, bei welcher der Drehzahlfehlerbereich in Abhängigkeit von $f_s$ und m wesentlich eingeschränkt ist. Liegt der Arbeitspunkt $f_{s,m}$ außerhalb des durch die Kurve C umschlossenen Bereiches, ergibt sich ein Drehzahlfehler von 0 %, innerhalb des durch C umschlossenen Bereiches ist der Drehzahlfehler durch den Schnittpunkt der Projektion von m auf C bestimmt.

In Figur 13 ist ein Stromvektor-Arbeitsdiagramm des Asynchronmotors 4 dargestellt. Die obere Figurenhälfte I zeigt den Verlauf des Stromvektors $I_s$ im motorischen Bereich, während die untere Figurenhälfte II den generatorischen Bereich darstellt. Die obere und untere Figurenhälfte ist weiterhin durch eine senkrechte Linie

$$\phi\,{}^*_{opt}$$

unterteilt, die den optimalen Drehmomentwert des Asynchronmotors 4 darstellt und die die Figur 13 in vier Quadranten 1*, 2*, 3*, 4* unterteilt. Unter einem Winkel $\pm\alpha_g$ von ungefähr 45° ist das motorisch und generatorisch erreichbare Nennmoment $M_{statmaxm}$, $M_{statmaxg}$ des Asynchronmotors 4 eingezeichnet. Im ersten Quadranten 1* ist unter einem Winkel $\alpha_{gm}$ weiterhin das maximal erreichbare statische Moment $M_s$ sowie das maximal erreichbare dynamische Moment $M_D$ für den Fall, daß die Stromgrenze bei 100 % liegt, eingezeichnet. Die Regelungslogik 6 und die mathematische Recheneinheit 7 berechnen einen einzustellenden Stromvektor $I_s$, wie bereits ausgeführt, der aus den Komponenten des Wirkstromes $I_w$ und Blindstromes $I_B$ berechnet wird, so daß der Vektor $I_s$ auf einer Kurve E geführt wird. Die gezeichnete Kurve E zeigt ein Beispiel für einen Stromgrenzwert von 100 %. Der Stromvektor $I_s$ folgt mit steigendem Moment der Kurve E bis zum Erreichen des Stromgrenzwertes im Punkt C. Bei weiter zunehmenden Moment folgt $I_s$ dann dem Kreisbogen mit Radius $I_k$ = 100 % bis zum Punkt B. Wenn der Stromvektor $I_s$ im Punkt D steht und ein großes dynamisches Moment anliegt, folgt $I_s$ zunächst dem Kreisbogen mit Radius $I_k$ = 90 %. Bei $\alpha = \alpha_g$ greift die Regelungslogik 6 ein und reagiert durch Erhöhen der Stromamplitude und der Schlupffrequenz, so daß der Stromvektor $I_s$ in den Punkt B zurückgeführt wird. Der Asynchronmotor 4 arbeitet dann in der Stromgrenze mit optimalen Drehmoment. Mit einer Vergrößerung des Lastmomentes nimmt der Drehzahlfehler weiter zu. Die zum Koordinatenursprung laufende Linie gibt das erreichbare statische Moment der Asynchronmaschine 4 an. Weiterhin sind die Verläufe für $I_k$ = 90 %, 110 % und 120 % eingezeichnet. Ferner ist in der Figur 13 in einer verkleinerten Darstellung der Momentenverlauf einer Asynchronmaschine 4 mit I-Umrichter oder U-Umrichter gezeigt.

Die Berechnung des Momentes erfolgt gemäß der neuen Schaltungsausführung nach folgender Formel:

$$M(\alpha,t) = \left(B + \frac{\{\Im_m((\int\{(\bar{U})^* - (\bar{J})^* \cdot R_s\}^F)^{F^*} \cdot (\bar{J})^{*T})\}^{F1}}{\mathcal{R}_e((\int\{(\bar{U})^* - (\bar{J})^* \cdot R_s\}^F)^{F^*} \cdot (\bar{J})^{*T})}\right) \cdot \left(k + \frac{\{\Im_m((\int\{(\bar{U})^* - (\bar{J})^* \cdot R_s\}^F)^{F^*} \cdot (\bar{J})^{*T})\}^{F1}}{\mathcal{R}_e((\int\{(\bar{U})^* - (\bar{J})^* \cdot R_s\}^F)^{F^*} \cdot (\bar{J})^{*T})}\right)^{0,5} \cdot \frac{\sin\alpha \cdot \cos\alpha^*}{0,5} \cdot e^{-\frac{t}{Tr}}$$

$$M_{DIN} = M(\alpha,t)\Big|_{\substack{t \to t_{reaktio} \\ \alpha^* = \alpha(t=0)}} \quad ; \quad M_{STAT} = M(\alpha,t)\Big|_{\substack{t=0 \\ \alpha^* = \alpha}} \quad .$$

$$(|\alpha| > |\alpha_g| \vee f_w \neq f_s \vee |\bar{\phi}| \leq |\bar{\phi}|_{min}) \Rightarrow \left| \begin{array}{l} \alpha = \alpha_{optimum} (\phi^* = \phi^*_{optimum}) \\ \text{Wellendrehzahlsuche oder Wellendrehzahlfolge} \end{array} \right. \quad .$$

$$f_w^* = (f_w + f_{din}) \vee (f_w + f_\Delta) \; ; \; V,R = sign\{k1 \cdot f_w^* + k2 \cdot \int f_w^*\} \; ; \; (\Omega_\phi = 0) \Rightarrow \left| \begin{array}{l} k1 = 0 \\ \text{Gegendrehmomentprobe} \end{array} \right. \quad .$$

In die Momentenberechnung geht der Momentenwinkel , die Zeit t, eine Konstante k sowie von der Betriebsart A, B, C abhängig die Größe B mit

$$\text{A:} \qquad SB = 0 \qquad B = I_B^2$$

$$\text{B:} \qquad SB = 1 \qquad B < I_B^2$$

$$\text{C:} \qquad SB = 0 \qquad B = I_B^2$$

$$\qquad \qquad SB = 1 \qquad B = I_w^2$$

ein.

Das statische Moment $M_{(\alpha)}$ ergibt sich durch Einsetzen von t = 0, wodurch der zeitabhängige Term $e^{-t/Tr}$ zu 1 wird und $\alpha^* = \alpha$ zu setzen ist, während das dynamische Moment über eine Zeitkonstante $T_r$ und einen Momentenwinkel $\alpha^* = \alpha_{(t=0)}$ ermittelt wird.

Die Regelungslogik 6 gemäß der Figur 1 ermöglicht hierbei eine Erkennung der Wellendrehzahl und Richtung des Asynchronmotors 4 durch eine Wellendrehzahlsuche oder, falls die Drehrichtung des Asynchronmotors 4 bekannt ist, durch die alleinige Ermittlung der Wellendrehzahlfolge, so daß die Statorfrequenz der Wellendrehzahl angepaßt werden kann. Bei der Wellendrehzahlsuche wird hierbei vorausgesetzt, daß der Momentenwinkel $\alpha \geq \alpha_g$ und/oder der interne Drehzahlsollwert $f_w$ ungleich der externen Drehzahlsollwertvorgabe $f_s$ und/oder die Flußamplitude $\phi \leq |\phi|_{min}$ ist. Aus dieser Bedingung ergibt sich, daß der Momentenwinkel den optimalen Momentenwinkel aufweist. Hieraus kann direkt die Schlußfolgerung gezogen werden, daß die Wirkleistung $\phi^*$ den optimalen Wirkleistungswert

$$\phi^*_{opt}$$

aufweist. Wie bereits ausgeführt, berechnet die Regelungslogik 6 und mathematische Einheit 7 den Momentenwinkel indirekt vorausschauend, so daß regelungstechnisch der Asynchronmotor 4 vor Erreichen des Kippmomentes A, F abgefangen werden kann.

In Figur 14 ist ein Spannungs-Strom-Flußdiagramm abgebildet, welches jeweils um 120° versetzt die Richtungen der Feldspulen A1, B1, C1 des Asynchronmotors 4 darstellt. Der Stromvektor I bewegt sich sprungartig um jeweils 60° in Laufrichtung des Asynchronmotors 4, während der Flußvektor $\phi_m$ kontinuierlich im Drehverlauf des Asynchronmotors 4 folgt. Bei Überschreitung der Grenze $\alpha > \alpha_g$ reagiert die Regelungslogik 6 mit Wellendrehzahlsuche bzw. -folge. Ferner zeigt Figur 14 den Verlauf der Motorinduktionsspannung $U_m$ bei verschiedenen Spannungsamplituden, entsprechend den jeweiligen Drehzahlen. Z. B. liegt bei Nenndrehzahl und Lastmoment m = 0 % der Vektor $U_m$ zum Zeitpunkt der Kommutierung im Punkt 3. Durch die Stromänderung dI/dt erfolgt eine Spannungsänderung von $U_m$ wie gezeigt. Die maximale Amplitude von $U_m$ wird jedoch durch die Kommutierungseinheit 14 auf den Wert $U_c$ begrenzt. Nach Abschluß der Kommutierung sinkt die Spannung auf ihren ursprünglichen Wert zurück. Unter einem festen Lastmoment liegt der Vektor $U_m$ z. B. im Punkt 1 und bei kleinerer Drehzahl und gleichem Lastmoment im Punkt 2. Die Spannungserhöhung auf den Maximalwert $U_c$ ist hierbei immer gleichgroß.

Figur 15 zeigt ein Zeitablaufdiagramm für die Regelung des Asynchronmotors 4 mit einem sich ändernden Lastmoment m. Die durch die Änderung des Lastmomentes m hervorgerufene Änderung des Momentenwinkels $\alpha$ wird im Flip-Flop 34 gespeichert, welches das Stromgrenzsignal $I_{k2}$ setzt. Gleichzeitig erfolgt durch den PI-Regler 35 eine Ermittlung des Drehzahlfehlers $f_{din}$, der ein Nachführen des Asynchronmotors 4 auf die Drehzahlvorgabe $f_w$ veranlaßt.Mit dem Erreichen eines Drehzahlfehlers gleich null wird das Flip-Flop 34 zurückgesetzt und der Asynchronmotor 4 bis zu einer weiteren Änderung des Lastmomentes im Arbeitspunkt gehalten. Die linke Hälfte der Figur 15 zeigt hierbei das typische Verhalten des Asynchronmotors 4 bei einer Laständerung, während die rechte Hälfte das Führungsverhalten der Regelungslogik 6 bei einer Nachführung des Asynchronmotors 4 zeigt.

In Figur 16 ist eine Logiktabelle abgebildet, über die die Regelungslogik 6 den Arbeitspunkt des Asynchronmotors 4 in einem der vier Quadranten gemäß Figur 13 ermittelt. Der Arbeitspunkt wird hierbei durch das Vorzeichen des Drehzahlsollwertes $f_s$ und das Vorzeichen des integrierten Drehmomentes $\int m$ sowie das Vorzeichen des Ausgangssignals H des Addierers 26 ermittelt. Die drei zu berücksichtigenden Signale sind in der Spalte 5, 6 und 7 aufgeführt. In Spalte 8 der Logiktabelle ist das Vorzeichen der Multiplikation der beiden Vorzeichen aus den Spalten 6, 7 aufgeführt, während in Spalte 9 die Tendenz hinsichtlich einer etwaigen Änderung des Vorzeichens $f_{\Delta w}/\Delta t$ aufgeführt ist. Aus den Vorzeichen können, wie bereits aufgeführt, die Arbeitsquadranten des Stromvektors gemäß der Spalte 2, 3 ermittelt werden. Über die Arbeitsquadranten wird gleichzeitig die Laufrichtung des Asynchronmotors 4 sowie die Betriebsart motorisch oder generatorisch in Spalte 4 ermittelt. Unter Berücksichtigung der sich abzeichnenden Tendenz ist in Spalte 10 die voraussichtliche Reaktion des Asynchronmotors 4 hinsichtlich seiner Drehzahl aufgeführt.

In den Figuren 17 bis 19 ist das Leistungsteils 2 der Schaltungsanordnung mit dem I-Umrichter 17 bzw. 20 ausführlicher dargestellt, wobei in Figur 17 der I-Umrichter 17 mit Dioden D1 bis D6 und Thyristoren T1 bis T6 ausgestattet ist. Ferner weisen die Thyristoren T1 bis T6 Löschungskondensatoren C13, C15, C35, C42, C46 und C62 auf, die zur Löschung der Thyristoren T1 bis T6 benötigt werden. Eine zusätzliche Beschaltung der Dioden D1 bis D6 mit Kondensatoren C2 und der Thyristoren T1 bis T6 mit Kondensatoren $C2^*$ ist nur erforderlich, wenn die Dioden bzw. Thyristoren keine innere Schutzschaltung aufweisen. Ferner ist aus der Figur 17 der Kommutierungs-Diodenbrückengleichrichter 15 und die Kommutierungseinheit 14 entnehmbar. Der Kommutierungs-Dioden-Brückengleichrichter 15 weist die Dioden $D1^*$ bis $D6^*$ auf. Die Kommutierungseinheit 14 kann aus einem Kondensator 10 oder einer Batterie bestehen, wobei durch die Kommutierungseinheit 14 die maximale Spannung $U_c$ festgelegt wird, so daß die Spannungsspitzen auch im I-Umrichter 17 bzw. 20 auf diesen Wert begrenzt werden. Der Asynchronmotor 4 ist symbolisch durch die drei Wicklungen A1, B1, C1 dargestellt, die mit dem Ausgang des I-Umrichters 17, wie aus Figur 1, 5 und 6 bekannt, verbunden sind. Eine Kommutierung des Motorstromes findet hierbei ganz oder zumindest teilweise in der Kommutierungseinheit 14 statt.

In Figur 17, 18, 19 wird jeweils der Stromverlauf in den einzelnen Phasen der Kommutierung für die Verwendung von Thyristoren mit Löschungskondensatoren, GTO's und Thyristoren mit Chopper dargestellt.

In Figur 17 fließt der Strom $I_{ein}$ über die Drossel 16 und den Thyristor T1 sowie die Diode D1 in die Wicklung A1 des Asynchronmotors 4 und über die Wicklung B1 und den I-Umrichter 17 als Strom $I_{aus}$ zum Netz zurück. Wenn der Thyristor T2 gezündet wird, erfolgt zunächst eine Entladung des Kondensators $C2^*$ über den Thyristor T2, so daß der Thyristor T2 leitend wird. Gleichzeitig löscht der Löschungskondensator C62 den Thyristor T6, wobei der Strom I kurzzeitig über den Löschungskondensator C62 fließt und diesen umlädt, so daß der Thyristor T6 gesperrt wird. Wenn der Löschungskondensator vollständig umgeladen ist, d. h. wenn $U_{c62} + U_{c2} = U_c$ lädt sich der Löschungskondensator C62 weiter bis zur Maximalspannung $U_c$ auf, wobei der Kondensator C2 ebenfalls umgeladen wird. Hiernach findet im Asynchronmotor 4 eine Stromverzweigung vor der Wicklung B1 statt, d. h. einerseits fließt der Strom I über die Wicklung A1 und C1 und andererseits fließt über die Diode $D3^*$ und die Kommutierungseinheit 14 sowie über den Kondensator C2 ein sinkender Stromanteil, solange die Spannung $U_{c2}$ ungleich null ist. Wenn die Spannung $U_{c2}$ den Wert null erreicht hat, wird die Diode D2 leitend und übernimmt den restlichen Stromfluß durch die Kommutierungseinheit 14, bis der Stromanteil durch die Wicklung B1 null wird. Die Stromanteile fließen sodann über den Thyristor T2 zum Netz zurück. Nach Beendigung der Kommutierungsphase fließt der Strom über die Wicklung A1, C1 und die Diode D2 sowie den Thyristor T2 zum Netz zurück, bis eine weitere Kommutierung eingeleitet wird.

Der Vorteil dieser Schaltung liegt darin, daß der Wert des Löschungskondensators C62 sehr klein gehalten werden kann und nur zur Löschung der Thyristoren benötigt wird.

In Figur 18 ist eine weitere Variante des I-Umrichters 17 dargestellt. Bei diesem I-Umrichter 17 werden anstelle der Thyristoren die GTO's 1 bis 6 eingesetzt, die über zwei Steuereingänge in einen leitenden und nichtleitenden Zustand überführt werden. Bei dieser Schaltungsanordnung besteht keine Notwendigkeit von Löschungskondensatoren, so daß der gesamte Kommutierungsstrom über die Kommutierungseinheit 14 geführt wird. Die GTO's weisen lediglich parallel geschaltete Schutzkondensatoren C1 bis C6 auf. Der Strom $I_{ein}$ fließt über die Drossel 16 und über das GTO-Bauelement 1 in die Wicklung A1 des Asynchronmotors 4 und über die Wicklung B1 zum GTO-Bauelement 6 des I-Umrichters 17 als Strom $I_{aus}$ ins Netz zurück.

Mit einer Löschung des GTO-Bausteines 6 und einer Zündung des GTO-Bauelementes 2 mit kontinuierlichen Zündimpulsen erfolgt der Stromfluß über die Wicklung A1, B1 und den Kondensator C6, bis der Kondensator C6 geladen ist. Wenn $U_{c6}$ = $U_c$ erfolgt eine Stromverzweigung wie im Beispiel zuvor, wobei ein halber Stromanteil über den Kondensator C6 und ein halber Stromanteil über die Diode D3*, die Kommutierungseinheit 14, die Diode D2* und den Kondensator C2 fließt. Die beiden Anteile des Stromes fließen kurzzeitig über den Kondensator C6, bis dieser geladen ist. In diesem Fall wird der Kondensator C2 ebenfalls umgeladen, so daß bei einer Spannung $U_{c2}$ das GTO-Bauelemement 2 leitend wird. Hierbei ist zu beachten, daß eine Kommutierungseinheit 14 mit einer Batterie die Spannung $U_c$ konstant hält, während ein Kondensator in der Kommutierungseinheit 14 ein langsames Ansteigen der Spannung $U_c$ ermöglicht. Mit einem Strom I = 0 durch die Wicklung B1 ist die Kommutierungsphase beendet und der Strom fließt über die Wicklung A1, C1 und das GTO-Bauelement 2 zum Netz zurück. Dieses Beispiel zeigt, daß ein Kommutierungsstrom vollständig über die Kommutierungseinheit 14 fließt, wobei der Kondensator C6 ein Element der RC-Beschaltung ist und der Kapazitätswert somit vernachlässigt werden kann.

Alternativ besteht die Möglichkeit, daß anstelle der GTO's Transistoren eingesetzt werden, die eine Schutzbeschaltung aus 2 Sperrdioden aufweisen.

In Figur 19 ist eine weitere Variante des I-Umrichters 20 ohne Löschungskondensatoren dargestellt. Die Thyristoren T1 bis T6 im I-Umrichter 20 werden über ein GTO durch ein Unterbrechen des Gleichstromzwischenkreises gelöscht. Aufgrund der Unterbrechung des Gleichstromzwischenkreises 21 bleibt die in der Drossel 16 gespeicherte Energie erhalten. Aus diesem Grund ist es notwendig, daß die Drossel 16 mit einem weiteren Thyristor T7 beschaltet ist. Der zur Drossel antiparallel geschaltete Thyristor T7 ermöglicht ein Verbleiben der Energie in der Drossel 16 während der Kommutierungsphase. Die Kommutierungsenergie verbleibt in den Wicklungen des Aysnchronmotors 4, da ein Stromfluß über den Gleichrichter 15 und die Kommutierungseinheit 14 aufrechterhalten wird. Der weitere Verlauf des Stromes I erfolgt analog zur Figur 18.

Der Vorteil dieser Schaltung liegt darin, daß anstelle von sechs GTO's nur ein GTO im Gleichstromzwischenkreis 21 zur Löschung der Thyristoren T1 bis T6 benötigt wird.

Bezugszeichenliste

| | |
|---|---|
| 1 | Netzspeiseeinrichtung |
| 2 | Leistungsteil mit Stromkommutierung |
| 3 | Meßvorrichtung |
| 4 | Asynchronmotor |
| 5a | Stromregelungslogik |
| 5b | Thyristerzündlogik |
| 6 | Regelungslogik |
| 7 | mathematische Einheit |
| 8 | Drehzahl-Sollwert-Geber |
| 9 | Sollwertanpassung |
| 10 | Drehstromnetz |
| 11 | Brückengleichrichter |
| 12 | Wechselrichter mit Rückspeisetransformator |
| 13 | Stromgeber |
| 14 | Kommutierungseinheit |
| 15 | Kommutierungs-Diodenbrückengleichrichter |
| 16 | Drossel |
| 17 | I-Umrichter |
| 18 | Drossel mit Thyristor |
| 19 | Zerhacker (Chopper) |
| 20 | I-Umrichter mit Thyristor |

| 21 | Gleichstromzwischenkreis |
|---|---|
| 22 | Zündlogik |
| 23 | Stromregler |
| 24 | Oder-Gatter |
| 25 | Frequenzabsolutwert- und Magnetisierstromregler |
| 26 | Addierer |
| 27 | Addierer |
| 28 | Umschaltbarer PI/I-Regler |
| 29 | Addierer |
| 30 | gesteuerter Analoginverter |
| 31 | Integrator |
| 32 | Wellenfrequenzdetektor |
| 33 | gesteuerter Komparator |
| 34 | Flip Flop |
| 35 | PI-Regler mit Reset |
| 36 | Oder-Gatter |
| 37 | Steuerlogik |
| 38 | Vorzeicheneinheit |
| 39 | Addierer |
| 40 | Umschalter-Logik |
| 41 | Filter mit Integrator |
| 42 | Filter |
| 43 | Vektormultiplikator |
| 44 | Flußfrequenzgeber |
| 45 | Flußamplitudengeber |
| 46 | Filter |
| 47 | Oder-Gatter |
| 48 | analoger Dividierer |
| 49 | analoger Schalter |
| 50 | analoger Addierer |
| 51 | Addierer |
| 52 | analoger Radizierer |
| 53 | Geber |
| 54 | Digitaladdierer |
| $f_s$ | externer Drehzahlsollwert |
| $f_w$ | interner Drehzahlsollwert |
| $f_1$ | Statorfrequenz |
| $|f|_1$ | absolute Statorfrequenz |
| $\dot{f}_1$ | berechnete Statorfrequenz |
| $f_2$ | Rotorfrequenz |
| $f_k$ | Korrekturfrequenz für Statorfrequenz |
| $\Delta f_1$ | Differenzfrequenz 1 |
| $\Delta f_2$ | Differenzfrequenz 2 |
| $f_{din}$ | Drehzahlfehler |
| $f_{\Delta w}$ | Drehzahlfehler |
| A | erste Variante 0-2 $H_z$ |
| B | zweite Variante 0-2 $H_z$ |
| C | dritte Variante 0-2 $H_z$ |
| $\Delta f$ | dynamische Statorfrequenz |
| $\Delta f_{max}$ | absolute maximale dynamische Statorfrequenz |
| $\phi$ | Flußamplitude |
| $\phi^*$ | Wirkleistung |
| $\phi_D min$ | minimal zulässige Flußamplitude |
| $\phi_{min}$ | digitalisiertes Steuersignal |
| m | berechnetes Drehmoment |
| $m^*$ | berechnetes Drehmoment nach Filter |
| w | digitalisiertes Flußsignal |
| $I_w$ | Wirkstrom |

| | | |
|---|---|---|
| $I_B$ | | Blindstrom |
| $I_s$ | | Stromsollwert |
| $I_k$ | | Stromgrenzwert |
| $I_{k1}$ | | dig. Stromgrenzsignal |
| $I_{k2}$ | | dig. Stromgrenzsignal |
| SB | | Blindstromschaltsignal |
| V | | Drehrichtung vorwärts |
| R | | Drehrichtung rückwärts |

$$f^*_{opt}$$

optimaler Wirkleistungswert

| | |
|---|---|
| $\alpha$ | Momentenwinkel |
| $\alpha_g$ | Mometenwinkelgrenzwert |
| $\alpha_v$ | Vergleichssignal |

## Patentansprüche

1. verfahren zur Steuerung eines Asynchronmotors (4), insbesondere mit einem kurzgeschlossenen Käfigläufer, mit einem dem Drehstromnetz (10) zugeordneten Brückengleichrichter (11) und einem über eine Meßvorrichtung (3) dem Asynchronmotor (4) zugeordneten I-Umrichter (17, 20), welche über einen Gleichstromzwischenkreis (21) miteinander verbunden sind und welcher eine in Reihe zum Brückengleichrichter (11) und I-Umrichter (17, 20) geschaltete Drossel (16, 18) aufweist sowie einem weiteren Brückengleichrichter (15), der parallel zur Meßvorrichtung (3) mit dem Ausgang des I-Umrichters (17, 20) verbunden ist und dessen Gleichstromausgang mit dem Eingang eines Wechselrichters (12) verbunden ist, wobei der Wechselrichter (12) über einen Rückspeisetransformator ausgangsseitig mit dem Drehstromnetz (10) verschaltet ist und wobei der Brückengleichrichter (11), der Wechselrichter (12) und der I-Umrichter (17, 20) von einer Schaltlogik (5, 6, 7, 8, 9, 24) gesteuert werden,

   dadurch gekennzeichnet,

   daß eine Kommutierung des Motorstromes ganz oder zumindest teilweise außerhalb des I-Umrichters (17, 20) vorgenommen wird, wobei der Kommutierungsstrom über die Schaltelemente des I-Umrichters (17, 20) und des Brückengleichrichters (15) einer Kommutierungseinheit (14) zugeführt wird und daß der Schaltlogik (5, 6, 7, 8, 9, 24) zur Steuerung der Netzspeiseeinrichtung (1) und des Leistungsteils (2) als Meßwerte der Motorstrom (I), die Motorinduktionsspannung ($U_i$) und ein Drehzahlsollwert ($f_s$) vorgegeben wird.

2. Verfahren nach Anspruch 1,

   dadurch gekennzeichnet,

   daß der Anteil der Kommutierung in der Kommutierungseinheit (14) durch das Kapazitätsverhältnis der Löschungskondensatoren des I-Umrichters (17) und der Kommutierungseinheit (14) bestimmt wird, sofern im I-Umrichter (17) Thyristoren mit Löschungskondensatoren eingesetzt werden und daß im I-Umrichter (20) mit GTO's oder Transistoren eine Kommutierung vollständig in der Kommutierungseinheit (14) vorgenommen wird.

3. Verfahren nach Anspruch 1,

   dadurch gekennzeichnet,

   daß zusätzlich die Steuerung eines zur Drossel (18) parallel geschalteten Schalters und einem in Reihe geschalteten Zerhackers (19) von der Schaltlogik vorgenommen wird.

4. Verfahren nach Anspruch 1,

dadurch gekennzeichnet,

daß durch die Regelungslogik (6) ein selbstätiges Auffinden der aktuellen Wellendrehzahl ermöglicht wird.

5. Verfahren nach Anspruch 1,

dadurch gekennzeichnet,

daß der Schaltlogik (5, 6, 7, 8, 9, 24) zusätzlich die Wellenposition und/oder die Statorfrequenz ($f_1^*$) des Asynchronmotors (4) zugeleitet wird.

6. Verfahren nach Anspruch 1,

dadurch gekennzeichnet,

daß aus der Motorinduktionsspannung ($U_i$) in der mathematischen Recheneinheit (7) die Flußamplitude ($\phi$), ein digitalisiertes Flußamplitudensignal

$$( \phi \ _{min}^{\cdot D} )$$

und die Flußfrequenz ($w\phi$) unter Berücksichtigung eines vorgegebenen minimal zulässigen Flußamplitudenwertes ($|\phi|_{min}$) sowie ein digitales Stromgrenzsignal ($I_{k1}$) ermittelt wird und daß aus dem Motorstrom (I) und der berechneten Flußamplitude ($\phi$) in der mathematischen Recheneinheit (7) das Drehmoment ($m$, $m^*$) und die Wirkleistung ($\phi^*$) und aus dem Drehmoment ($m$) die Rotorfrequenz ($f_2$) berechnet wird.

7. Verfahren nach Anspruch 6,

dadurch gekennzeichnet,

daß aus dem Drehmoment ($m^*$) und der Wirkleistung ($\phi^*$) der Wirkstrom ($I_w = \tan \alpha = m^*/\phi^*$) berechnet wird, wobei die Motorinduktionsspannung ($U_i$) des Asynchronmotors (4) bei Laständerungen in einer Übergangsphase durch die Steuerlogik über einen konstanten Wert $\tan \alpha$ zwangsnachgeführt wird.

8. Verfahren nach einem oder mehreren der Ansprüche 1 bis 7,

dadurch gekennzeichnet,

daß die Schaltlogik (5, 6, 7, 8, 9, 24) im Bereich von 0 bis 2 Hz durch eine externe Vorgabe der Betriebsart (A, B, C) eingestellt und die mathematische Einheit (7) über ein Blindstromschaltsignal (SB) der Regelungslogik (6) angesteuert wird und daß eine Berechnung des Stromsollwertes ($I_s$) in der mathematischen Einheit (7) aus dem Blindstrom ($I_B$) und dem Wirkstrom ($I_w$) nach

$$I_s = \sqrt{ B + I_w^2 + k \cdot I_w }$$

vorgenommen wird, wobei k ein konstanter einstellbarer Parameter ist und wobei in der ersten Betriebsart (A) der Anteil B einem dem quadratischen Blindstrom ($I_B^2$) entsprechenden Wert gleichgesetzt und in der Betriebsart (B) kleiner als der quadratische Blindstrom ($I_B^2$) sowie in der Betriebsart (C) dem quadratischen Wirkstrom ($I_w^2$) gleichgesetzt wird

9. Verfahren nach einem oder mehreren der Ansprüche 1 bis 8,

dadurch gekennzeichnet,

daß aus dem Drehmoment ($m$) über einen Integrator (31) ein digitalisiertes Umschaltsignal ( sign ($\int m$) ) für einen Wellenfrequenzdetektor (32) und einen umschaltbaren Analoginverter (30) sowie aus der

Wirkleistung ($\phi^*$) und einem vorgegebenen optimalen Wirkleistungswert

$$( \phi^*_{opt} )$$

ein Flußfehler (H) für den Analoginverter (30)erzeugt wird.

10. Verfahren nach einem oder mehreren der Ansprüche 1 bis 9,

dadurch gekennzeichnet,

daß aus der Wirkleistung ($\phi^*$) über einen steuerbaren Komparator (33) ein Schaltsignal für das Flip-Flop (34) erzeugt wird, wobei aus der Flußfrequenz ($w_\phi$),der minimalen Flußamplitude ($|\phi|_{min}$), einem vorgegebenen Momentenwinkelgrenzwert ($\alpha_g$) und dem vorgewählten Betriebsmodus (A, B, C) das von der Steuerlogik (49) eingestellte Vergleichssignal ($\alpha_v$) für den Komparator (33) erzeugt wird.

11. Verfahren nach einem oder mehreren der Ansprüche 1 bis 10,

dadurch gekennzeichnet,

daß aus einem internen Drehzahlsollwert ($f_w$) und einer aus einem PI-Regler (35) ermittelten Differenzfrequenz ($\Delta f_1$) ein Eingangssignal für den umschaltbaren PI/I-Regler (28) und einen Addierer (27) ermittelt wird, wobei die Umschaltung des PI/I-Reglers (28) durch die Flußfrequenz ($w_\phi$) vorgenommen wird und daß die jeweils aktuelle Drehrichtung des Statorfeldes über das Vorzeichen des Ausgangssignals (V, R) des PI/I-Reglers (28) ermittelt wird.

12. Verfahren nach einem oder mehreren der Ansprüche 1 bis 11,

dadurch gekennzeichnet,

daß aus der Rotorfrequenz ($f_2$) und der Differenzfrequenz ($\Delta f_1$) des Addierers (29) ein Steuersignal für einen Frequenzabsolutwert- und Magnetisierungsstromregler (25) unter Berücksichtigung einer Korrekturfrequenz ($f_k$) des Frequenzabsolutwert- und Magnetisierungsstromreglers (25) und des eingestellten Betriebsmodus (A, B, C) erzeugt wird, wobei durch den Frequenzabsolutwert- und Magnetisierungsstromregler (25) der Blindstrom ($I_B$) errechnet und das Blindstromschaltsignal (SB) für die mathematische Recheneinheit (7) erzeugt wird.

13. Verfahren nach einem oder mehreren der Ansprüche 1 bis 12,

dadurch gekennzeichnet,

daß das Flip-Flop (34) durch den von der Wirkleistung ($\phi^*$) beeinflußten Komparator (33) gesetzt wird und daß aus einer zweiten Differenzfrequenz ($f_{\Delta w}$) des PI-Reglers (35) und dem digitalisierten Steuersignal ( sign ($\int m$) ) ein Rücksetzsignal (R) über einen Wellenfrequenzdetektor (32) für das Flip-Flop (34) ermittelt wird.

14. Verfahren nach Anspruch 13,

dadurch gekennzeichnet,

daß das Flip-Flop (34) im gesetzten Zustand über das Ausgangssignal den PI-Regler (35) zurücksetzt und das Stromgrenzsignal ($I_{k1}$) setzt, welches im gesetzten Zustand der Stromregelungs- und Zündlogik (5) einen vorgewählten Stromgrenzwert ($I_k$) und im ungesetzten Zustand den berechneten Stromgrenzwert ($I_s$) zur Weiterverarbeitung übermittelt.

15. Verfahren nach einem oder mehreren der Ansprüche 1 bis 14,

17

dadurch gekennzeichnet,

daß eine von der Meßvorrichtung (3) zusätzlich gemessene Statorfrequenz ($f_1^*$) einer Umschaltlogik (40) der Regelungslogik (6) zugeführt wird, welcher weiterhin die Rotorfrequenz ($f_2$) die minimal zulässige Flußamplitude ($|\phi|_{min}$) und der interne Drehzahlsollwert ($f_w$) zur Ermittlung eines zweiten Stromgrenzsignales ($I_{k2}$), welches über ein Oder-Gatter (36) der Stromregelungs- und Zündlogik (5) zugeführt wird und ein Signal ($\Delta f_1$) für den Addierer (29) und einem weiteren Addierer (39) mit einer Rückkopplung der dynamischen Statorfrequenz ($\Delta f$) auf die Umschaltlogik (40) zugeführt wird und daß die Rotorfrequenz ($f_2$) einer Vorzeicheneinheit (38) und dem Addierer (39) zugeführt wird, wobei durch die Vorzeicheneinheit (38) unter Berücksichtigung der absoluten maximalen dynamischen Statorfrequenz ($\Delta f_{max}$) eine Regelgröße für den Addierer (39) zugeleitet wird.

16. Verfahren nach einem oder mehreren der Ansprüche 1 bis 15,

dadurch gekennzeichnet,

daß über einen Geber (53) die aktuelle digitalisierte Wellenposition ($f_w^D$) erfaßt wird und unter Berücksichtigung eines digitalisierten Drehzahlsollwertes ($f_s^D$) zur Erzeugung einer Regelgröße für die Stromregelungs- und Thyristorzündlogik (5) herangezogen wird und daß im Lastbetrieb über den auftretenden Positionsfehler der Wellenposition das Gegenmoment durch eine drehende Stromfeldamplitude mit einer Frequenz von einigen Hertz aufgebaut wird.

17. Verfahren nach einem oder mehreren der Ansprüche 1 bis 16,

dadurch gekennzeichnet,

daß in beiden Drehrichtungen des Asynchronmotors (4) bei niedriger Drehzahl oder Drehzahl null durch die P-Komponente des umschaltbaren PI/I-Reglers (28) eine Strompendelung mit einer durch die Schaltlogik vorgegebenen Eigenfrequenz vorgenommen wird.

18. Verfahren nach einem oder mehreren der Ansprüche 1 bis 17.

dadurch gekennzeichnet,

daß eine Regelung des Asynchronmotors (4) über die Regelungslogik (6) bei der Verwendung von GTO's, Transitoren oder Thyristoren und einem Chopper (19) im Gleichstromzwischenkreis (21) mit einem 30°-Feldsprung vorgenommen wird.

19. Schaltungsanordnung zur Steuerung eines Asynchronmotors (4), insbesondere mit einem kurzgeschlossenen Käfigläufer, mit einem dem Drehstromnetz (10) zugeordneten Brückengleichrichter (11) und einem über eine Meßvorrichtung (3) dem Asynchronmotor (4) zugeordneten I-Umrichter (17, 20), welche über einen Gleichstromzwischenkreis (21) miteinander verbunden sind und welcher eine in Reihe zum Brückengleichrichter (11) und I-Umrichter (17, 20) geschaltete Drossel (16, 18) aufweist sowie einem weiteren Brückengleichrichter (15), der parallel zur Meßvorrichtung (3) mit dem Ausgang des I-Umrichters (17, 20) verbunden ist und dessen Gleichstromausgang mit dem Eingang eines Wechselrichters (12) verbunden ist, wobei der Wechselrichter (12) über einen Rückspeisetransformator ausgangsseitig mit dem Drehstromnetz (10) verschaltet ist und wobei der Brückengleichrichter (11), der Wechselrichter (12) und der I-Umrichter (17, 20) von einer Schaltlogik (5, 6, 7, 8, 9, 24) steuerbar sind,

dadurch gekennzeichnet,

daß der Brückengleichrichter (15) am Gleichstromausgang eine parallel geschaltete Kommutierungseinheit (14) aufweist, die eine Kommutierung des Motorstromes ganz oder zumindest teilweise vom I-Umrichter (17, 20) übernimmt und daß die Meßvorrichtung (3) zwischen I-Umrichter (17, 20) und Asynchronmotor (4) der Schaltlogik als Meßwerte den Motorstrom (I) und die Motorinduktionsspannung ($U_i$) übermittelt und daß ein extern eingestellter Drehzahlsollwert ($f_s$) vorgebbar ist.

20. Schaltungsanordnung nach Anspruch 19,

dadurch gekennzeichnet,

daß der I-Umrichter (17) aus jeweils zwei in Reihe geschalteten Thyristoren und Sperrdioden für jede Phase des Drehstromausganges mit Löschungskondensatoren besteht und die gemeinsamen Anoden und Kathoden mit dem Gleichstromzwischenkreis (21) verbunden sind und die Löschungskondenstoren im I-Umrichter (17) jeweils mit zwei Kathoden der Thyristoren verbunden und zur Löschung der Thyristoren vorgesehen sind.

21. Schaltungsanordnung nach Anspruch 19,

dadurch gekennzeichnet,

daß der I-Umrichter (17) für jede Phase des Drehstromausganges zwei Transistoren aufweist, die über den Emitter des ersten Transistors und den Kollektor des zweiten Transistors miteinander und mit den Anschlüssen des Asynchronmotors (4) verbunden sind, wobei die Kollektoren des ersten Transistors und die Emitter des zweiten Transistors mit dem Gleichstromzwischenkreis verbunden sind und jeweils eine Sperrdiode im Emitter- oder Kollektoreingang der Transistoren vorgesehen ist und daß jeweils eine weitere Sperrdiode zwischen Kollektor und Emitter in Sperrichtung geschaltet ist.

22. Schaltungsanordnung nach Anspruch 19,

dadurch gekennzeichnet,

daß der I-Umrichter (17) aus jeweils zwei in Reihe geschalteten GTO's für jede Phase des Drehstromausganges besteht und die gemeinsamen Anoden und Kathoden mit dem Gleichstromzwischenkreis (21) verbunden sind.

23. Schaltungsanordnung nach Anspruch 19,

dadurch gekennzeichnet,

daß der I-Umrichter (20) aus jeweils zwei in Reihe geschalteten Thyristoren für jede Phase des Drehstromausganges besteht und die gemeinsamen Anoden und Kathoden mit dem Gleichstromzwischenkreis (21) verbunden sind und daß der Gleichstromzwischenkreis (21) einen zur Drossel (18) in Reihe geschalteten Zerhacker (19) und einen zur Drossel (18) antiparallel geschalteten Schalter in Form eines Thyristor, eines GTO's oder eines Transistors mit in Reihe geschalteter Diode aufweist.

24. Schaltungsanordnung nach einem oder mehreren der Ansprüche 19 bis 23,

dadurch gekennzeichnet,

daß die Kommutierungseinheit (14) ein Kondensator oder eine Batterie ist.

25. Schaltungsanordnung nach einem oder mehreren der Ansprüche 19 bis 24,

dadurch gekennzeichnet,

daß die Thyristoren oder Transistoren des I-Umrichters (17, 20), des ersten Brückengleichrichters (11) und des Wechselrichters (12) von der Schaltlogik steuerbar sind.

26. Schaltungsanordnung nach einem oder mehreren der Ansprüche 19 bis 25,

dadurch gekennzeichnet,

daß der antiparallel zur Drossel (18) geschaltete Schalter und der Zerhacker (19) im Gleichstromzwischenkreis (21) von der Schaltlogik zusätzlich steuerbar sind.

EP 0 455 148 A2

27. Schaltungsanordnung nach einem oder mehreren der Ansprüche 19 bis 26,

dadurch gekennzeichnet,

daß die Schaltlogik eine Stromregelungs- und Thyristorzündlogik (5), eine Regelungslogik (6), eine mathematische Recheneinheit (7), einen Drehzahl-Sollwert-Geber (8) mit einer Sollwertanpassung (9) und ein Oder-Gatter (24) umfaßt.

28. Schaltungsanordnung nach einem oder mehreren der Ansprüche 19 bis 27,

dadurch gekennzeichnet,

daß die Stromregelungs- und Transistorzündlogik (5) über einen Eingang (5.1) mit einem Ausgang (24.3) eines Oder-Gatters (24) verbunden ist, welches mit dem ersten Eingang (24.1) und mit dem Ausgang (7.7) der mathematischen Einheit (7) und mit dem zweiten Eingang (24.2) sowie mit dem Ausgang (6.12) der Regelungslogik (6) verbunden ist, daß über einen Eingang (5.2) ein Stromgrenzwert ($I_k$) vorgebbar ist, daß zwei weitere Eingänge (5.3, 5.4) mit den Ausgängen (6.10, 6.11) der Regelungslogik (6) direkt verschaltet sind, daß ein Eingang (5.5) mit dem Drehstromnetz (10), ein Eingang (5.6) mit einem Stromgeber (8) und ein Eingang (5.9) mit dem Ausgang (7.8) der mathematischen Einheit (7) verbunden ist und daß ein erster Ausgang (5.10) mit dem Wechselrichter (12), ein zweiter Ausgang (5.11) mit dem Brückengleichrichter (11) und ein Ausgang (5.15) mit dem I-Umrichter (17) verschaltet sind und daß die mathematische Recheneinheit (7) über zwei Eingänge (7.1, 7.2) mit der Meßvorrichtung (3) direkt verbunden ist, daß zwei Eingänge (7.3, 7.4) mit den Ausgängen (6.9, 6.8) der Regelungslogik (6) verbunden sind und daß die Ausgänge (7.5, 7.6, 7.9, 7.10, 7.11) mit den Eingängen (6.3, 6.2, 6.1, 6.5, 6.6) der Regelungslogik (6) verbunden sind und daß die Regelungslogik (6) zusätzlich über einen Eingang (6.4) mit dem Ausgang (9.2) der Sollwertanpassung (9) verbunden ist und mit dem internen Drehzahlsollwert ($f_w$) beaufschlagbar ist, wobei der externe Drehzahlsollwert ($f_s$) über einen Drehzahl-Sollwertgeber (8) vorgebbar ist und den Eingang (9.1) der Sollwertanpassung (9) beaufschlagt.

29. Schaltungsanordnung nach einem oder mehreren der Ansprüche 19 bis 28,

dadurch gekennzeichnet,

daß die zusätzlich berechnete Statorfrequenz ($f_1^*$) über einen Ausgang (3.3) der Meßvorrichtung (3) auf einen Eingang (6.7) der Regelungslogik (6) geführt ist.

30. Schaltungsanordnung nach einem oder mehreren der Ansprüche 19 bis 29,

dadurch gekennzeichnet,

daß der Asynchronmotor (4) zusätzlich einem Geber zur Erfassung der Wellenposition aufweist, dessen Ausgang (53.1) mit einem Eingang (54.2) eines Digitaladdierers (54) verbunden ist, wobei ein zweiter Eingang (54.2) mit einem Ausgang (9.3) der Sollwertanpassung (9) und der Ausgang (54.3) mit dem Eingang (5.8) der Stromregelungs- und Thyristorzündlogik (5) verbunden ist.

31. Schaltungsanordnung nach Anspruch 19,

dadurch gekennzeichnet,

daß die gesamte Schaltlogik durch einen Mikroprozessor und/oder analogen/digitalen Signalprozessor ersetzbar ist.

20

EP 0 455 148 A2

Figur 1

1
1.3  2.9
1.4  2.10
1.5  2.2
1.6  2.1
2

1.1 1.9 1.8 1.7
2.7  2.6 2.5 2.4 2.3

5.10 5.5 5.6 5.7
5.12  5.13 5.14 5.15 5.15

5.4  5.3  5.2 5.1  5.5

24

2.8  3.1  3.4  3.2  3  4

7.1  7.2  7

6.10  6.11  6.12  6.5  6.6  6.8b

7.11
7.10
7.4
7.3
7.9

6.9
6.1

8
9.1 9.2  6.4

7.8
6.2  7.7
6.3  7.6
7.5

Figur 2

EP 0 455 148 A2

Figur 3

Figur 4

Figur 7

Figur 5

Figur 6

Figur 8

Figur 9

Figur 10

Figur 11

Figur 12

Figur 13

29

Figur 14

| t | TABELLE X,Y |
|---|---|
| 0 – 1 | I. (1,5) |
| 1 – 2 | 1,9 |
| 2 – 3 | 1,9 ; 2,9 |
| 3 – 4 | 2,9 |
| 4 – 5 | I. (1,5) |
| 5 – 6 | II. (3,5) |
| 6 – 7 | 3,9 |
| 7 – 8 | 3,9 ; 4,9 |
| 8 – 9 | 1,9 ; 5,9 |
| 9 – 10 | 5,9 ; 6,9 |
| 10 – 11 | 6,9 ; 2,9 |
| 11 – 12 | I. (1,5) |
| 12 – 13 | 3,9 → 4,9 |
| 13 – 14 | I. (1,5) |
| 14 – 15 | 3,9 → 4,9 ; 8,9 |
| 15 – 16 | II. (7,5) |
| 16 – 17 | 5,9 → 6,9 ; 2,9 |
| 17 – | I. (1,5) |

Figur 15

EP 0 455 148 A2

EP 0 455 148 A2

| X \ Y | 1 | 2 | 3 | 4 | 5 | 6 | 7 | 8 | 9 | 10 |
|---|---|---|---|---|---|---|---|---|---|---|
| | DREHRICHTUNG (fw) | STROMVEKTOR ARBEITSQUADRANT | | BETRIEB | $Sign\{f_s\}$ | $sign\{\int m\}$ | H | $Sign\{\int m\}\cdot H$ | $\Delta f_{\Delta w}/\Delta t$ | DREHZAHL |
| 1 | VORWÄRTS | I. | 1 | MOTOR | + | + | −(+) | −(+) | 0 − 0 | ABNAHME |
| 2 | | | 2 | MOTOR | + | + | +(−) | +(−) | 0 + 0 | ZUNAHME |
| 3 | | II. | 3 | GENERATOR | + | − | −(+) | +(−) | 0 + 0 | ZUNAHME |
| 4 | | | 4 | GENERATOR | + | − | +(−) | −(+) | 0 − 0 | ABNAHME |
| 5 | RÜCKWÄRTS | I. | 1 | GENERATOR | − | + | −(+) | −(+) | 0 − 0 | ZUNAHME |
| 6 | | | 2 | GENERATOR | − | + | +(−) | +(−) | 0 + 0 | ABNAHME |
| 7 | | II. | 3 | MOTOR | − | − | −(+) | +(−) | 0 + 0 | ABNAHME |
| 8 | | | 4 | MOTOR | − | − | +(−) | −(+) | 0 − 0 | ZUNAHME |

Figur 16

Figur 17

Figur 18

Figur 19

EP 0 455 148 A2